# EUROPEAN PATENT APPLICATION

(11) **EP 4 826 635 A1**
(43) Date of publication of application: **21.10.2026**
(21) Application number: 26171835.7
(22) Date of filing: 13.04.2026
(51) Int. Cl.: G06Q 50/10, G06Q 10/047, G01C 21/36, G06Q 30/0601

(54) **NAVIGATION AND TRACKING SYSTEM IN LARGE VENUES**

(30) Priority: 14.04.2025 US 202563788780 P; 01.04.2026 US 202619636755
(71) Applicant: Ubiquitly LLC, Reno Nevada 895111 (US)
(72) Inventor: Kubalski, Artur, San Diego (US)
(74) Representative: Felber, Josef

(57) **Abstract**

The disclosed technology relates to systems and methods for generating and presenting recap information. The disclosed technology includes a computer-implemented method comprising obtaining historical interaction data associated with a visitor-participant; generating a recap UI based on the historical interaction data. In some examples, the recap UI may include at least a first interface element associated with a map representation of the destination venue and a second interface element identifying one or more touchpoints of the destination venue the visitor-participant engaged with. Moreover, the computer-implemented method may include receiving a first input associated with a first portion of the second interface element associated with a first touchpoint of the destination venue. Further, the computer-implemented method may include adjusting the first interface element to a first state based on the first input, the first state being associated with focusing on a graphical representation associated with the first touchpoint.

## Description

### CROSS-REFERENCE TO RELATED APPLICATIONS

This application claims the benefit of, and priority to, U.S. Provisional Application No. 63/788,780 filed on April 14, 2025, the contents of which are incorporated herein by reference in their entirety and for all purposes.

### BACKGROUND

### FIELD

This disclosure is generally related to navigation and tracking systems, and more specifically, to navigation and tracking systems for destination venues, such as amusement parks.

### SUMMARY

Provided herein are a system, apparatus, article of manufacture, method and/or computer program product embodiments, and/or combinations and sub-combinations thereof, for capturing and/or processing historical interaction data associated with a visitor-participant to generate an itinerary for the visitor-participant. In some examples, a computer-implemented method is disclosed for capturing and/or processing historical interaction data associated with a visitor-participant to generate an itinerary for the visitor-participant. The computer-implemented method may include obtaining, for a visitor-participant, historical interaction data of a destination venue and user-provided data; generating a recap user interface (UI) based on the historical interaction data of the destination venue and the user-provided data, the recap UI including at least a first interface element associated with a map representation of the destination venue and a second interface element identifying one or more touchpoints of the destination venue the visitor-participant engaged with; receiving a first input associated with a first portion of the second interface element associated with a first touchpoint of the destination venue; adjusting the first interface element to a first state based on the first input, the first state being associated with focusing on a graphical representation associated with the first touchpoint; receiving a second input to a second portion of the second interface element associated with a second touchpoint of the destination venue; and adjusting the first interface element to a second state from the first state based on the second input, the second state being associated with focusing on a graphical representation associated with the second touchpoint.

In some cases, a computing system is provided for capturing and/or processing historical interaction data associated with a visitor-participant to generate an itinerary for the visitor-participant. The computing system may include at least one memory and at least one processor coupled to the at least one memory, the at least one processor configured to perform operations including obtaining, for a visitor-participant, historical interaction data of a destination venue and user-provided data; generating a recap user interface (UI) based on the historical interaction data of the destination venue and the user-provided data, the recap UI including at least a first interface element associated with a map representation of the destination venue and a second interface element identifying one or more touchpoints of the destination venue the visitor-participant engaged with; receiving a first input associated with a first portion of the second interface element associated with a first touchpoint of the destination venue; adjusting the first interface element to a first state based on the first input, the first state being associated with focusing on a graphical representation associated with the first touchpoint; receiving a second input to a second portion of the second interface element associated with a second touchpoint of the destination venue; and adjusting the first interface element to a second state from the first state based on the second input, the second state being associated with focusing on a graphical representation associated with the second touchpoint.

In some aspects, a non-transitory computer-readable storage medium is provided for capturing and/or processing historical interaction data associated with a visitor-participant to generate an itinerary for the visitor-participant. In some instances, the non-transitory computer-readable medium may comprise at least one instruction for causing at least one computing device to perform operations including obtaining, for a visitor-participant, historical interaction data of a destination venue and user-provided data; generating a recap user interface (UI) based on the historical interaction data of the destination venue and the user-provided data, the recap UI including at least a first interface element associated with a map representation of the destination venue and a second interface element identifying one or more touchpoints of the destination venue the visitor-participant engaged with; receiving a first input associated with a first portion of the second interface element associated with a first touchpoint of the destination venue; adjusting the first interface element to a first state based on the first input, the first state being associated with focusing on a graphical representation associated with the first touchpoint; receiving a second input to a second portion of the second interface element associated with a second touchpoint of the destination venue; and adjusting the first interface element to a second state from the first state based on the second input, the second state being associated with focusing on a graphical representation associated with the second touchpoint.

### BRIEF DESCRIPTION OF THE FIGURES

The accompanying drawings are incorporated herein and form a part of the specification.
FIG. 1 illustrates a block diagram of a navigation and tracking environment, according to some examples of the present disclosure;
FIG. 2 illustrates a block diagram of an edge device, according to some examples of the present disclosure;
FIG. 3A illustrates an example itinerary user interface (UI), according to some examples of the present disclosure;
FIG. 3B and FIG. 3C illustrate an example recap UI, according to some examples of the present disclosure;
FIG. 4 illustrates a flow chart of an example process for adjusting a recap UI, according to some examples of the present disclosure;
FIG. 5 is a diagram illustrating an example of a neural network architecture, according to some examples of the present disclosure; and
FIG. 6 illustrates an example computer system that can be used for implementing various aspects of the present disclosure.

In the drawings, like reference numbers generally indicate identical or similar elements. Additionally, generally, the left-most digit(s) of a reference number identifies the drawing in which the reference number first appears.

### DETAILED DESCRIPTION

Destination venues, such as amusement parks, national parks, historical sites, entertainment arenas, and other large-scale visitor-focused environments, often span expansive physical areas and/or include a large number of touchpoints. As described herein, a touchpoint may be a location or element that one or more visitor-participants may engage or interact with. Examples of touchpoints may include, but are not limited to, amusement park touchpoints (e.g., amusement park rides), national park touchpoints (e.g., hiking trails), tradeshow touchpoints (e.g., interactive booths and/or learning spaces), arena touchpoints (e.g., concession stands), ski resort touchpoints (e.g., lifts), and other visitor-accessible locations or elements. Due to the geographic size, scale and number of touchpoints of a destination venue, the destination venue may present significant navigation, scheduling, and experience optimization challenges for visitors, particularly those unfamiliar with the layout of the destination venue, operational nuances, and/or real-time conditions.

Conventional navigation and tracking systems associated with the destination venue(s) may implement one or more conventional navigation processes to enable visitor-participant(s) to navigate around the destination venue(s) to one or more touchpoints of the destination venue(s). The conventional navigation process(es) may be based on static map data of the destination venues (e.g., static information regarding touchpoint locations), touchpoint data (e.g., touchpoint status data identifying and characterizing the operational status of the touchpoint, such as whether the touchpoint is open, closed, temporarily closed for maintenance for example, etc., estimated queue time data indicating estimated queue times for one or more touchpoints, scheduled performance time data indicating scheduled performance times for one or more touchpoints, etc.), and/or location data of visitor-participants. Moreover, the conventional navigation processes may be primarily designed for first-time or infrequent visitor-participants and may provide static maps, isolated listings of touchpoints (e.g., attraction listings) and/or generalized wait-times. Further, the conventional navigation processes and/or navigation and tracking systems may provide limited personalization and/or limited dynamic optimization of the destination venue experience for repeat visitor-participants (e.g., annual pass holders, high-frequency visitor-participants, etc.).

In some cases, the conventional navigation and tracking systems may not capture or use historical interaction data associated with a visitor-participant's visit to the destination venue(s) and/or participation/engagement with touchpoint(s) within the destination venue(s) to personalize or dynamically optimize the visitor-participant's experience of the destination venue(s), such as for the repeat visitor-participants. For example, the conventional navigation and tracking system may be unable, or may have limited ability, to process historical interaction data of the visitor-participant to generate a personalized itinerary for the visitor-participant. As a result, the visitor-participant may manually create fragmented itineraries using personal notes or memory, resulting in suboptimal visit planning, missed opportunities, and inefficient time allocation.

Provided herein are a system, apparatus, device, method and/or computer program product embodiments, and/or combinations and sub-combinations thereof (hereinafter "systems and techniques"), for capturing and/or processing historical interaction data associated with a visitor-participant to generate an itinerary for the visitor-participant. The itinerary may identify one or more touchpoints of interest. As described herein, the visitor-participant may visit and/or engage with the identified touchpoint(s) of interest at a future point in time (e.g., an upcoming visit). In some instances, the itinerary may identify or determine pathways for the visitor-participant to use to go between the identified touchpoint(s) of interest.

As described herein, the historical interaction data of a visitor-participant may include corresponding historical interaction information identifying and characterizing previous interactions, engagements or visits with one or more touchpoints of one or more destination venues by the corresponding visitor-participant, corresponding timestamps, and location information. In some cases, the systems and techniques described herein may process historical interaction data to determine patterns, trends, and preferences associated with a visitor-participant's visit and/or engagement with one or more destination venues. The systems and techniques described herein may generate an itinerary for the visitor-participant based on the determined patterns, trends, and preferences. In some instances, the systems and techniques described herein may provide an itinerary UI that presents information associated with the itinerary.

Additionally, or alternatively, the historical interaction data may include and/or be based in part on user-provided data. In some cases, the user-provided data may include check-in data. The check-in data may indicate a visitor-participant's physical presence at one or more touchpoints of one or more destination venues. In some instances, the check-in data may include location information associated with the indicated physical presence of the visitor-participant at a touchpoint and corresponding timestamps. In some cases, the check-in data may be based on an input provided by the visitor-participant (e.g., the systems and techniques described herein may provide a check-in UI to enable a visitor-participant to provide an input indicating the presence of the visitor-participant at a touchpoint). Additionally, or alternatively, the check-in data may be based on the location data associated with the visitor-participant (e.g., the systems and techniques described herein may use geofences, GPS data, Bluetooth beacons, and/or Wi-Fi signals to determine the visitor-participant's presence at a touchpoint). In some examples, the systems and techniques described herein may determine a duration of stay and/or engagement level with one or more touchpoints at which the visitor-participant was indicated to be present based on the check-in data. Such determinations may be included in the check-in data.

In some examples, the systems and techniques described herein may determine, for a visitor-participant and/or an itinerary associated with a destination venue, one or more touchpoints of interest and/or associated pathway(s) between the touchpoint(s) of interest based on associated historical interaction data. Examples of types of touchpoints of interest that the systems and techniques may determine include, but are not limited to, attraction type touchpoint(s), purchase-related touchpoint(s), and event type touchpoint(s).

In some cases, the systems and techniques described herein may process additional user-provided data to generate the itinerary for the visitor-participant, including, but not limited to, identifying one or more touchpoints of interest of a destination venue the visitor-participant may visit and/or engage with at a future point in time and/or associated pathways. The additional user-provided data may be based on inputs provided by a visitor-participant. Examples of data that may be included in the additional user-provided data include but are not limited to, purchase data identifying and characterizing items purchased by a visitor-participant at a location of a destination venue, such as food, beverages and/or merchandise, search data identifying and characterizing search queries provided by the visitor-participant, and preference data indicating one or more preferences associated with touchpoint(s) of a destination venue.

In some aspects, the systems and techniques described herein may process historical weather data to generate the itinerary for the visitor-participant. As described herein, the historical weather data may include historical weather information characterizing past weather conditions of one or more regions of one or more destination venues. In some instances, the systems and techniques described herein may determine visitor-participant behavior patterns related to weather conditions based on correlating the historical weather data with associated historical interaction data. Based on the visitor-participant behavior pattern(s), the systems and techniques described herein may identify one or more touchpoints of interest.

In some cases, the systems and techniques described herein may process historical destination venue data to generate an itinerary for a visitor-participant. The historical destination venue data may include historical destination venue condition information identifying and characterizing historical destination venue conditions (e.g., historical operational conditions of one or more touchpoints of the destination venue). Based on the historical destination venue data and in some instances, further based on historical interaction data and/or additional user-provided data, the systems and techniques described herein may determine visitor-participant behavior patterns related to destination venue conditions. Based on the visitor-participant behavior patterns, the systems and techniques described herein may identify one or more touchpoints of interest.

In some examples, the systems and techniques described herein may recommend times to visit and/or engage with the identified touchpoint(s) of interest based on historical interaction data of a visitor-participant, additional user-provided data, historical weather data and/or historical destination venue data. In some aspects, the systems and techniques described herein may determine an order of the touchpoint(s) of interest identified in an itinerary based on associated recommended visit and/or engagement times. Additionally, or alternatively, the ordering of the identified touchpoint(s) may be optimized using historical destination venue data (e.g., historical conditions of the touchpoint(s) of the destination venue), and/or associated historical weather data to minimize unnecessary travel distances, avoid congestion-prone areas, and sequence touchpoints in a way that enhances the visitor experience. In some instances, the systems and techniques described herein may determine the ordering of the identified touchpoint(s) of interest based on historical movement data and/or movement preference data. As described herein, the historical movement data may include information characterizing prior movements of the visitor-participant within the destination venue, and/or movement preferences, such as whether the visitor-participant prefers less crowded routes, scenic pathways, or direct routes between touchpoints (e.g., attractions).

In some cases, the systems and techniques described herein may adjust an itinerary for a destination venue dynamically based on real-time weather data and/or real-time destination venue data. As described herein, the real-time weather data may include real-time weather information identifying and/or characterizing real-time or current weather conditions of one or more regions of one or more destination venue(s). Moreover, the real-time destination venue data may include real-time destination venue condition information. Based on the real-time weather conditions of the region(s) of the destination venue and/or real-time destination venue conditions of the region(s) of the destination venue, the systems and techniques described herein may determine one or more adjustments to the itinerary.

In some cases, destination venues may experience significant visitor congestion at exit points, transportation hubs, and surrounding roadways during peak departure periods. Inefficient exit strategies may lead to extended parking lot wait times, long public transportation queues, and visitor dissatisfaction due to delays and overcrowding. The conventional navigation and tracking systems often lack predictive modeling, historical behavior analysis, real-time destination venue data processing, and visitor-specific data integration to dynamically recommend optimal departure windows and egress routes. Consequently, visitor-participants may rely on static, intuition-based departure decisions, resulting in inefficient exits, prolonged travel delays, and exacerbated congestion at key egress locations.

The systems and techniques described herein may determine, for a visitor-participant, an exit recommendation associated with a destination venue based on an associated itinerary, historical destination venue data, real-time destination venue data, real-time weather data, historical weather data, location data from a client device of the visitor-participant, and/or crowdrelated data associated with other visitor-participants, such as aggregated and/or shared location data and/or itinerary data of other visitor-participant(s). In some examples, the systems and techniques described herein may generate the exit recommendation associated with an itinerary of the visitor-participant prior to the date the visitor-participant visits the associated destination venue. In some aspects, the systems and techniques described herein may generate the exit recommendation associated with the itinerary of the visitor-participant during the visitor-participant's visit to the associated destination venue.

In some cases, a geographic size of destination venue(s) and/or the number of touchpoints included in the destination venue(s) may make it challenging for visitor-participants to efficiently plan and navigate their visit. In some instances, visitor-participants may seek predefined or crowdsourced itineraries that reflect expert recommendations, high-engagement routes, or itineraries shared by other visitor-participants. The conventional tracking and navigation systems often lack mechanisms for dynamically integrating social-generated itinerary data into a visitor-participant's individual itinerary. Conventional systems also fail to adapt social-generated itinerary data based on a visitor-participant's historical interaction data and additional user-provided data, resulting in rigid, non-personalized recommendations that do not fully align with individual preferences of the visitor-participant, mobility constraints, real-time destination venue conditions and/or real-time weather conditions. Without adaptive integration, visitor-participants may be unable to effectively merge social-generated itinerary data with their own schedules, limiting flexibility, engagement, and overall visit optimization.

The systems and techniques described herein may obtain social-generated itinerary data for a visitor-participant. The social-generated itinerary data may include itinerary information associated with other visitor-participants. In some instances, the itinerary information of other visitor-participants may be generated by the systems and techniques described herein, based on, among other things, associated historical interaction data, associated additional user-provided data, historical weather data, and historical destination venue data. In some examples, the systems and techniques described herein may generate a personalized itinerary for a visitor-participant based on, among other things, associated historical interaction data, associated additional user-provided data, historical weather data, historical destination venue data, etc. In some cases, the systems and techniques described herein may incorporate one or more portions of the social-generated itinerary data into the personalized itinerary so that it aligns with the visitor-participant's historical behaviors, preferences, and conditions, etc.

In some aspects, the systems and techniques described herein may continuously refine the personalized itinerary or combined itinerary (e.g., an itinerary incorporating the personalized itinerary and one or more portions of the social-generated itinerary data) based on real-time destination venue conditions, real-time weather conditions, visitor movement tracking, and/or user preferences, ensuring that the personalized social-generated itinerary and/or combined itinerary remains optimized and adaptive throughout the visit.

In some cases, visitor-participants at destination venue(s), such as amusement parks, national parks, and entertainment venues, often engage with multiple touchpoints (e.g., attractions, dining locations, scenic areas, events) throughout their visit. The conventional navigation and tracking systems may provide limited capability to enable visitor-participants to review, visualize, and relive their visit experiences. Visitor-participants may therefore rely on personal memory, static photographs, or manually recorded notes, to review, visualize and relive their visit experiences, which may result in fragmented, non-contextualized recollections of their visit.

The systems and techniques described herein may process historical interaction data (e.g., movement patterns, historical path data, etc.) of a visitor-participant and/or additional user-provided data (e.g., check-in data, review data, etc.) of the visitor-participant to generate recap information. As described herein, the recap information may include information identifying and characterizing a recap of a visit of a destination venue by a visitor-participant. For example, the recap information may identify touchpoints the visitor-participant visited and/or engaged with, pathways used by the visitor-participant to travel to each identified touchpoint, and in some instances, reviews provided by the visitor-participant and/or preferences of the visitor-participant. The reviews and/or preferences may be associated with one or more identified pathways and/or one or more identified touchpoints.

In some cases, the systems and techniques described herein may provide a recap UI to present the recap information. In some examples, the recap UI may include one or more interface features or elements, such as a first interface feature or element configured to present a list of the identified touchpoints, and/or a second interface feature or element configured to present a synchronized map representation of the visitor-participant's movement throughout the venue. In some instances, the systems and techniques described herein may enable animated playback of the visit via the recap UI based on user selections and interactions with one or more portions of the recap UI (e.g., with the first interface feature or element that presents the list of identified touchpoints).

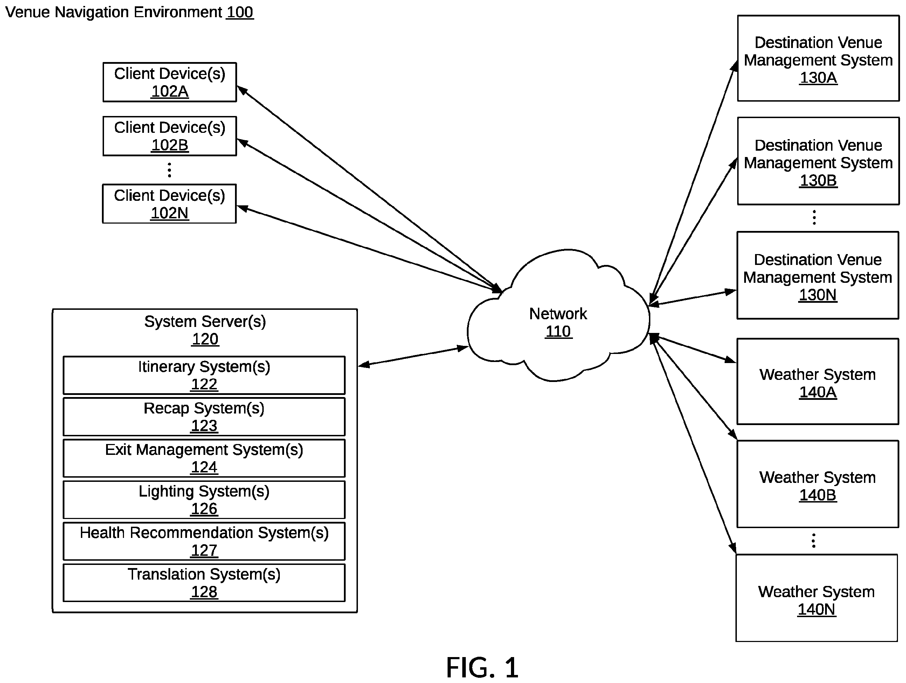

Various embodiments and aspects of this disclosure may be implemented using, and/or may be part of, destination venue navigation environment 100 shown in FIG. 1. It is noted, however, that the destination venue navigation environment 100 is provided for illustrative purposes and is not limiting. Examples and embodiments of this disclosure may be implemented using, and/or may be part of, environments that are different from and/or in addition to the destination venue navigation environment 100, as will be appreciated by persons skilled in the relevant art(s) based on the teachings contained herein. An example of the destination venue navigation environment 100 shall now be described.

### Example Destination Venue Navigation Environment

FIG. 1 illustrates a block diagram of a destination venue navigation environment 100, according to some embodiments. In a non-limiting example, destination venue navigation environment 100 may be directed to generating itineraries for one or more destination venues (e.g., amusement parks, national parks, historical sites, entertainment areas, zoos, aquariums, botanical gardens, fairs, festivals, street markets, neighborhood events, community events and other large-scale, medium-scale, or hyper-local visitor-focused environments). However, this disclosure is applicable to any type of geographical region (instead of or in addition to destination venues), as well as any mechanism, means, protocol, method, and/or process for identifying one or more associated touchpoints of interest, adjusting the itineraries and/or determining recap information identifying and characterizing a recap of a visit of the geographic region by a visitor-participant.

In some configurations, destination venue navigation environment 100 may support generation, management, and adjustment of personalized itineraries and/or related itinerary outputs for visitor-participants associated with one or more destination venues. Moreover, destination venue navigation environment 100 may support generation and presentation of recap information associated with completed visits by the visitor-participants, such that recap-related functions may operate as an extension of the itinerary-related functions. Additionally, or alternatively, destination venue navigation environment 100 may support one or more auxiliary or satellite functions, such as exit recommendation functions, lighting recommendation functions, health-related recommendation functions, translation functions, crowd-control functions, and/or power-efficient location-tracking functions.

Destination venue navigation environment 100 may include one or more client device(s). In FIG. 1, destination venue navigation environment 100 includes client device 102A, client device 102B and client device 102N (collectively "client device 102" hereafter). However, the number of client devices shown in FIG. 1 is merely one illustrative example provided for explanation purposes. In some examples, destination venue navigation environment 100 may include more client devices than shown in FIG. 1. In some cases, destination venue navigation environment 100 may include less client devices than shown in FIG. 1. A visitor-participant may use or operate a client device, such as client device 102A.

Client device(s) 102 are configured to generate, process and/or analyze historical interaction data associated with a visitor-participant to generate an itinerary of a destination venue for a visitor-participant. The itinerary may identify one or more touchpoints of interest the visitor-participant may visit and/or engage with at a future point in time (e.g., amusement park touchpoints (e.g., rides, shows, eateries, food and beverage stations, themed zones, merchandise shops, concession stands, restrooms, etc.), national park touchpoints (e.g., scenic overlooks, hiking trails, visitor centers, restrooms, etc.), tradeshow touchpoints (e.g., interactive booths, learning spaces, etc.), arena touchpoints (e.g., restrooms, concession stands, merchandise shops, food and beverage stations, etc.), zoo touchpoints (e.g., animal exhibits, feeding areas, keeper-talk locations, viewing platforms, petting areas, rest areas, food locations, and gift shops), aquarium touchpoints (e.g., tank exhibits, tunnel exhibits, live presentation areas, feeding demonstration areas, touch pools, food locations, and retail areas), botanical garden touchpoints (e.g., garden sections, conservatories, seasonal exhibit areas, guided-tour meeting points, scenic paths, food locations, and gift shops), local-event or hyper-local-event touchpoints (e.g., vendor booths, performance stages, parade routes, pop-up activity stations, temporary exhibit spaces, check-in points, sponsor activations, and community gathering areas), and the like ). In some instances, the itinerary may also identify or determine pathways for the visitor-participant to use to go between the identified touchpoint(s) of interest.

As described herein, the historical interaction data of a visitor-participant may include historical interaction information. The historical interaction information may identify and characterize a visitor-participant's historical interaction information of one or more destination venues. In some examples, client device(s) 102 may generate historical interaction data of a visitor-participant. Moreover, the historical interaction data of the visitor-participant may be based on location data (e.g., Global Positioning System (GPS) data) obtained or generated by an associated client device 102. The location data may include location information of the visitor-participant as the visitor-participant navigates around a destination venue and corresponding timestamps.

Examples of historical interaction information associated with a visitor-participant include, but are not limited to, identifying information associated with the visitor-participant (e.g., an identifier or an anonymized identifier (e.g., hashed) of the visitor-participant, an identifier or anonymized identifier (e.g., hashed) of a corresponding client-device), identifying information of each destination venue the visitor-participant visited, corresponding location information, corresponding historical attraction interaction information (e.g., for each touchpoint associated with an attraction, such as, rides, shows, exhibits, performances, etc., the visitor-participant visited, information identifying and/or characterizing the touchpoint and/or corresponding interaction information, such as, but not limited to, the number of visits for the touchpoint, time spent at the touchpoint, corresponding location, etc.), corresponding historical event interaction information (e.g., for each touchpoint associated with an event, such as a fireworks event, a parade event, etc., the visitor-participant visited, information identifying and/or characterizing the touchpoint and/or corresponding interaction information), corresponding historical merchandise, food and beverage interaction information (e.g., for each touchpoint associated with food and beverage(s) and/or merchandise, such as a kiosk, restaurant, cart, food stands, and the like, information identifying and/or characterizing the touchpoint and/or corresponding interaction information, such as, but not limited to, the number of visits for the touchpoint, time spent at the touchpoint, corresponding location, food and/or beverage related preferences, etc.), corresponding historical movement information (e.g., information identifying and/or characterizing paths taken through the destination venue, time spent moving, time spent waiting or being stationary, areas of the destination venue frequently visited, such as information identifying and/or characterizing, location of areas associated with taking a picture or shaded areas for breaks, areas of the destination venue avoided, average speed of movement, preferred pathways, etc.), corresponding historical temporal visit information (e.g., information identifying and/or characterizing dates and/or times of visits, average visit duration, inferred seasonal preferences associated with visiting the destination venue, such as visit patterns during holidays, festivals, or off-peak times, inferred time-of-day preferences associated with visiting the destination venue, such as morning visits versus evening visits, inferred time-of-day preferences associated with one or more touchpoints the visitor-participant visited, etc.) and other corresponding historical preferences information (e.g., types of touchpoints frequently visited, such as, but not limited to, rollercoaster rides, scenic overlooks, quiet rest areas, interactive exhibits, shows/performances, etc., thematic preferences associated with touchpoints related to events and/or attractions, such as, preference for sci-fi themed areas versus nature trails, etc., etc.). In some examples, the touchpoints and corresponding historical interaction information may be associated with non-ride-based venues and event environments, such as animal exhibits, aquatic exhibits, garden zones, seasonal floral displays, temporary vendor areas, neighborhood festival stages, pop-up installations, farmers market booths, and other local-event or hyper-local-event touchpoints.

Additionally, or alternatively, client device(s) 102 may generate historical interaction data of a visitor-participant based on data provided by the visitor-participant to client device(s) 102 (herein after "user-provided data"). The user-provided data may include one or more inputs provided by the visitor-participant to client device(s) 102. The input(s) may be associated with one or more touchpoints of a destination venue and/or pathways between each of the one or more touchpoints.

In some cases, user-provided data may include check-in data, which represents explicit or automatically generated indications of a visitor-participant's presence at a touchpoint of a destination venue. As described herein, the check-in data may be created based on inputs provided by the visitor-participant through a check-in UI of client device(s) 102, or automatically based on location data of client device(s) 102. The check-in data may include corresponding location information and timestamps, which may be associated with the visitor-participant or with the nearest touchpoint determined from venue map data. For example, when a visitor-participant provides a check-in input at a touchpoint, client device(s) 102 may record the visitor's location and time of entry. Moreover, client device(s) 102 may associate the input with the corresponding touchpoint. In another example, client device(s) 102 may detect that it has entered a predefined geofenced region of a touchpoint and, if the device remains in the region for at least a predetermined duration, may automatically generate check-in data indicating the visitor-participant's presence at that touchpoint. In some cases, client device(s) 102 may further characterize engagement with the touchpoint by recording the duration of stay, frequency of visits, or other indications of interaction, which may be incorporated into the check-in data for itinerary generation, recap information, or other processing.

In some examples, client device(s) 102 may determine the touchpoint(s) of interest for the itinerary based on historical interaction data. In some cases, pathways between the touchpoint(s) of interest, based on the historical interaction data. For instance, client device(s) 102 may use one or more AI/ML models to determine one or more touchpoint(s) of interest for the itinerary and/or pathways between the touchpoint(s) of interest based on the historical interaction data. In some instances, a touchpoint of interest may be an attraction type touchpoint. Client device(s) 102 may identify one or more attraction type touchpoints (e.g., rides, shows, exhibits, performances, and the like) of a destination venue that a visitor-participant previously engaged with or visited, along with corresponding timestamps, based on historical interaction data. Moreover, client device(s) 102 may determine the frequency and/or duration of each engagement and/or visit to the identified attraction type touchpoints. Client device(s) 102 may compare the frequency and/or duration of each engagement and/or visit to one or more predetermined threshold criteria (e.g., a minimum engagement or visit frequency indicating a likelihood of continued interest in the attraction type touchpoint). If the determined frequency and/or duration meets or exceeds the threshold criteria, client device(s) 102 may determine such attraction type touchpoint is a touchpoint of interest for the itinerary. Otherwise, client device(s) 102 may deprioritize or omit the attraction type touchpoint from the itinerary.

In some instances, a touchpoint of interest may be a purchase-related touchpoint (e.g., a merchandise type touchpoint and/or a food and/or beverage type touchpoint). As described herein, a purchase-related touchpoint may include a touchpoint associated with one or more purchase, transaction, ordering, and/or item-acquisition activities of a visitor-participant within a destination venue. In some instances, purchase-related touchpoints may include food and beverage touchpoints (e.g., restaurants, carts, kiosks, concession stands, snack stations, beverage stations, and the like) and/or merchandise touchpoints (e.g., merchandise shops, retail kiosks, vendor booths, gift shops, and the like). Client device(s) 102 may process historical interaction data to identify one or more purchase-related touchpoints of a destination venue that a visitor-participant previously engaged with or visited, along with corresponding timestamps. Moreover, client device(s) 102 may determine the frequency and/or duration of each engagement and/or visit to the identified purchase-related touchpoint(s). Client device(s) 102 may compare the determined frequency and/or duration of engagement of each identified purchase-related touchpoint to one or more predetermined threshold criteria (e.g., a minimum engagement or visit frequency indicating a likelihood of continued interest in the food and beverage-type touchpoint). Based on the comparison, client device(s) 102 may determine historical purchasing preferences (e.g., frequently visited purchase-related touchpoints (e.g., a restaurant meeting or exceeding the threshold criteria), preferred food types, cuisine and/or merchandise, inferred from frequently visited purchase-related, etc.). If the determined frequency and/or duration meets or exceeds the threshold criteria, client device(s) 102 may determine such purchase-related is a touchpoint of interest for the itinerary. Otherwise, client device(s) 102 may deprioritize or omit the purchase-related touchpoint from the itinerary.

In some instances, a touchpoint of interest may be an event type touchpoint. Client device(s) 102 may process historical interaction data to identify one or more event type touchpoints (e.g., fireworks events, parade events, live performances, seasonal events, and the like) a visitor-participant previously engaged with or visited, along with corresponding timestamps. Additionally, client device(s) 102 may determine the frequency and/or duration of each engagement and/or visit to the identified event type touchpoints. Client device(s) 102 may compare the determined frequency and/or duration of engagement to one or more predetermined threshold criteria (e.g., a minimum engagement or visit frequency indicating a likelihood of continued interest in the event type touchpoint). If the determined frequency and/or duration meets or exceeds the threshold criteria, client device(s) 102 may determine such event type touchpoint is a touchpoint of interest for the itinerary. Otherwise, client device(s) 102 may deprioritize or omit the event type touchpoint from the itinerary.

Additionally, or alternatively, client device(s) 102 may generate an itinerary of a destination venue for a visitor-participant based on additional user-provided data of the visitor-participant. In some examples, client device(s) 102 may identify one or more touchpoints of interest based on the additional user-provided data. For instance, client device(s) 102 may use one or more AI/ML models to determine one or more touchpoint(s) of interest for the itinerary and/or pathways between the touchpoint(s) of interest based on the additional user-provided data. As described herein, the additional user-provided data may include one or more inputs provided by visitor-participant(s) via client device(s) 102, such as but not limited to, review related inputs (e.g., inputs characterizing reviews related to touchpoint(s) the visitor-participant visited and/or engaged with), purchase related inputs (e.g., inputs identifying and characterizing items purchased by a visitor-participant at a destination venue, such as food, beverages and/or merchandise), search related inputs (e.g., inputs identifying and characterizing search queries), and preference related inputs (e.g., inputs indicating one or more preferences associated with touchpoint(s) of a destination venue). The input(s) may be associated with one or more touchpoints of a destination venue and/or pathways between each of the one or more touchpoints. Client device(s) 102 may generate the user-provided data based on the one or more inputs of the visitor-participant(s), such as, but not limited to, review data based on review related input(s), purchase data based on purchase related input(s), search data based on search related input(s), and preference data based on preference related inputs.

As described herein, purchase data may include purchase information that identifies and characterizes one or more purchase-related touchpoints, including food and beverage touchpoints and/or merchandise touchpoints a visitor-participant engaged or interacted with. The purchase data may identify item(s) purchased by the visitor-participant and may include corresponding timestamps, associated touchpoints for each purchase, frequency and/or duration of purchase interactions, and consumption patterns such as associated times of day, types of food and/or beverages purchased, and dining preferences. For example, purchase data may capture whether a visitor-participant favors coffee in the morning, snacks in the afternoon, or merchandise items from particular categories. In some instances, client device(s) 102 may process the purchase data to determine or infer preferences for particular cuisine types or categories of purchase-related touchpoints. Further, client device(s) 102 may process the purchase data to determine spending habits and interest in particular categories of merchandise.

Review data may include review information identifying and characterizing attraction type touchpoints, purchase-related touchpoints, or event type touchpoints that a visitor-participant has provided review content (e.g., ratings, comments and/or feedback). The review data may further include the visitor-participant provided ratings, comments and/or feedback provided by the visitor-participant, corresponding timestamps, classifications, and characteristics of the touchpoints (e.g., food type, beverage type, attraction type, event type), along with sentiment analysis derived from the review content (e.g., positive, negative, or neutral sentiment). In some instances, client device(s) 102 may process the review data to determine or infer visitor-participant sentiment and to identify behavioral patterns such as, but not limited to, consistently favorable reviews for live performances or repeated negative reviews for attractions with long queues.

Search data may include search information identifying and characterizing attraction type touchpoints, purchase-related touchpoints, or event type touchpoints corresponding to queries or filters applied by a visitor-participant within a search interface of client device(s) 102. For example, search for thrill rides may indicate interest in rest-area touchpoints, scenic-area touchpoints and/or other amenity-related touchpoints, and a search for specific cuisines may indicate interest in purchase-related touchpoints. In some instances, client device(s) 102 may process the search data to anticipate visitor-participant interest in corresponding touchpoints prior to an actual visit or to detect recurring query patterns indicating evolving interests. In some cases, search data may include, but is not limited to, search category selection information (e.g., predefined filters such as food type or show schedule), search frequency, and search-to-engagement correlation (e.g., how often searches for roller coasters lead to visits), time-based search trend information (e.g., queries around mealtimes), location-based search information (e.g., queries for the nearest food stall or restroom), and search abandonment information (e.g., queries that did not result in a selection).

Preference data may include preference information identifying and characterizing one or more preferences for one or more touchpoints, including, but not limited to, attraction type touchpoints, purchase-related touchpoints, and event type touchpoints. In some examples, the preference data may be based on explicit inputs from a visitor-participant such as, but not limited to selections of favorite rides, preferred dining times, or accessibility needs, via client device(s) 102. Additionally, or alternatively, the preference data may be based on implicit preferences derived from frequency or duration of interactions with particular touchpoints, as well as, from purchase data, review data, and/or search data. For instance, client device(s) 102 may process data derived from frequency or duration of interactions with particular touchpoints, purchase data, review data, and/or search data to determine implicit preferences. For example, preference data may indicate a tendency to select quick-service dining locations, to attend evening live shows, or to avoid attractions with long queues. In some cases, preference data may capture a wide range of characteristics, including, but not limited to, food and beverage preferences (e.g., cuisine types, dietary restrictions, beverage types, mealtime preferences, consumption trends, etc.), attraction, event, and scenic route preferences (e.g., favorite ride types, participation in parades or concerts, preference for shaded walkways, interest in less-visited sections of the venue, etc.), temporal preferences (e.g., weekday vs. weekend visits, seasonal visit patterns, preferred time-of-day for specific attractions or meals, visit durations, etc.) and environmental and wait-time preferences (e.g., preferred weather conditions, desire to avoid outdoor rides in extreme heat, queue tolerance levels such as, but not limited to, avoiding rides with waits over a threshold or preferring virtual queue systems, etc.).

In some examples, client device(s) 102 may generate an itinerary for a destination venue based on historical weather data such as, identifying, for the itinerary, one or more touchpoints of interest and/or pathways between the touchpoints. As described herein, the historical weather data may include historical weather information characterizing past weather conditions of one or more regions of one or more destination venues. The historical weather data may include location data indicating geospatial information corresponding to specific venue areas and timestamps associated with recorded weather conditions. Client device(s) 102 may process the historical weather data, historical interaction data and/or additional user-provided data to determine visitor-participant behavior patterns related to historical weather conditions. Moreover, client device(s) 102 may identify one or more touchpoints of interest and/or determine pathways between touchpoints based on the visitor-participant behavior patterns. In some instances, client device(s) 102 may use one or more AI/ML models to determine the visitor-participant behavior pattern(s) related to weather conditions based on the historical weather data, historical interaction data and/or additional user-provided data, and/or the touchpoint(s) of interest and/or pathway(s) based on the visitor-participant behavior pattern(s). For example, a visitor-participant's behavior pattern may indicate the visitor-participant may historically engage in specific activities during overcast conditions. In such example, client device(s) 102 may prioritize similar touchpoints in a future itinerary when comparable weather conditions are predicted. In another example, a visitor-participant's behavior pattern may indicate that the visitor-participant may historically avoid outdoor activities in extreme weather conditions. In such example, client device(s) 102 may dynamically rank indoor experiences higher when similar conditions are forecasted.

In some examples, client device(s) 102 may generate an itinerary for a destination venue based on historical destination venue data, such as, by identifying, for the itinerary, one or more touchpoints of interest and/or pathways between the touchpoints. As described herein, the historical destination venue data may include historical destination venue condition information identifying and/or characterizing past conditions of the venue, including but not limited to operational records (e.g., attraction status changes, recorded downtimes, scheduled or unscheduled maintenance events), patterns of attendance and crowd flow (e.g., peak operating hours, seasonal fluctuations, movement density across venue sections), touchpoint-specific analytics (e.g., historical queue lengths, wait times, demand trends for dining or merchandise locations), and transportation or traffic data (e.g., historical entrance/exit bottlenecks, parking utilization, or public transportation usage trends). The historical destination venue data may also include corresponding location and timestamp information.

Client device(s) 102 may process the historical destination venue data, alone or in combination with historical interaction data and/or additional user-provided data, to determine visitor-participant behavior patterns related to venue conditions. Moreover, client device(s) 102 may determine one or more touchpoints of interest and/or pathways between touchpoints based on the visitor-participant behavior patterns. In some instances, client device(s) 102 may use AI/ML model(s) to process the historical destination venue data, historical interaction data and/or additional user-provided data to determine visitor-participant behavior patterns related to venue conditions and/or determine the touchpoint(s) of interest and/or pathway(s). For example, a visitor-participant's behavior pattern may indicate that they historically prefer visiting rides with shorter average wait times during specific time windows. In such an example, client device(s) 102 may prioritize similar low-wait attractions in a future itinerary. In another example, a visitor-participant's behavior pattern may indicate that they historically avoid congested dining areas during peak mealtimes. In such an example, client device(s) 102 may recommend alternative food and beverage touchpoints with historically lower demand or propose shifting dining to an off-peak window.

In some examples, client device(s) 102 may determine, for one or more touchpoints of interest included in an itinerary of a destination venue, corresponding times to visit and/or engagement times based on historical interaction data of a visitor-participant, additional user-provided data, historical weather data and/or historical destination venue data. Client device(s) 102 may process these inputs to determine historical arrival and engagement patterns of the visitor-participant, congestion periods for one or more touchpoints of interest identified in an itinerary, preferences (e.g., preferred dining times), predicted popularity information of the touchpoint(s) of interest and/or predicted availability information of the touchpoint(s) of interest. Based on such determinations, client device(s) 102 may determine recommended times to visit and/or engage with the one or more identified touchpoints of interest.

In some aspects, client device(s) 102 may determine a sequence/order of the touchpoint(s) of interest based on corresponding times to visit and/or engage with the touchpoint(s) of interest. In such aspects, client device(s) 102 may optimize the ordering to minimize unnecessary travel distances, avoid congestion-prone areas, and enhance the visitor experience. For example, client device(s) 102 may recommend a morning show followed by adjacent attractions that historically open in the same time window. In another example, client device(s) 102 may identify that a visitor-participant historically prefers high-energy activities first and therefore sequence thrill rides ahead of dining or scenic pathways. In some instances, client device(s) 102 may optimize the ordering of touchpoints using historical movement information, such as whether the visitor-participant prefers less crowded routes, scenic pathways, or direct routes between attractions.

In some cases, client device(s) 102 may adjust an itinerary for a destination venue dynamically based on real-time weather data and/or real-time destination venue data. As described herein, the real-time destination venue data may identify and characterize current venue conditions (e.g., operational status of attractions, crowd flow patterns, attendance statistics, touchpoint-specific analytics, and transportation or traffic information). Moreover, the real-time weather data may identify and characterize current weather conditions (e.g., temperature, precipitation, humidity, wind speed, or sun exposure trends). The real-time weather data and/or real-time destination venue data may include corresponding location data (e.g., geospatial coordinates, section identifiers) and time data (e.g., timestamps associated with detected conditions). Based on the real-time weather data and/or real-time destination venue data, client device(s) 102 may determine one or more adjustments to the itinerary, such as, but not limited to, reordering touchpoints of interest, modifying estimated visit or engagement times, adding or removing touchpoints, or replacing touchpoints with alternative recommendations that better align with current conditions. Client device(s) 102 may apply the adjustment(s) to one or more of the touchpoints of interest included in the itinerary.

In some instances, client device(s) 102 may determine an exit recommendation associated with a destination venue for a visitor-participant. The exit recommendation(s) may be based on a visitor-participant's itinerary, historical interaction data of the visitor-participant (e.g., prior departure patterns), additional user-provided data (e.g., stated preferences for exit routes), historical destination venue data (e.g., prior congestion levels at exits), historical weather data (e.g., precipitation trends at closing hours), and/or real-time destination venue and weather data (e.g., current crowding conditions, traffic reports, or weather alerts). The exit recommendation(s) may include, but are not limited to, identifying a recommended time for the visitor-participant to leave the venue, selecting one or more exit points of the venue, and/or providing a recommended pathway from the visitor-participant's current location to the identified exit point(s). Client device(s) 102 may integrate the exit recommendation into the itinerary to optimize departure timing and routing. For example, client device(s) 102 may further generate rerouting suggestions to avoid high-congestion areas or direct the visitor-participant to alternative exits when primary exits are crowded, closed, or otherwise unavailable.

In some examples, client device(s) 102 may obtain social-generated itinerary data for a visitor-participant, which may include itinerary information associated with other visitor-participants. In some cases, the itinerary information associated with other visitor-participants may be generated by client device(s) 102 and/or system server(s) 120 based on associated historical interaction data, additional user-provided data, historical weather data, and historical destination venue data. In some instances, client device(s) 102 may generate a personalized itinerary for the visitor-participant and may further personalize one or more portions of the social-generated itinerary data by incorporating the visitor-participant's historical interaction data, additional user-provided data, historical weather data, and historical destination venue data. In some aspects, client device(s) 102 may integrate one or more portions of the social-generated itinerary data into the personalized itinerary based on the visitor-participant's historical interaction data, additional user-provided data, historical weather data, and historical destination venue data. In some instances, client device(s) 102 may continuously refine the personalized or combined itinerary (e.g., an itinerary incorporating the personalized itinerary and one or more portions of the social-generated itinerary data) based on real-time destination venue conditions, real-time weather data, visitor movement tracking, and user preferences, ensuring that the itinerary remains optimized and adaptive throughout the visit.

In some examples, client device(s) 102 may process historical interaction data (e.g., movement patterns, historical path data, etc.) of a visitor-participant and/or additional user-provided data (e.g., check-in data, review data, etc.) of the visitor-participant to generate recap information. The recap information may include information identifying and characterizing a recap of a visit of a destination venue by a visitor-participant. For example, the recap information may identify touchpoints the visitor-participant visited and/or engaged with, pathways used by the visitor-participant used to travel to each identified touchpoint, and in some instances, reviews provided by the visitor-participant and/or preferences of the visitor-participant. The reviews and/or preferences may be associated with one or more identified pathways and/or one or more identified touchpoints. In some instances, the recap information may further include one or more summary metrics associated with the visit, such as a number of attraction-type touchpoints visited, a total travel distance within the destination venue, a total number of steps, one or more per-touchpoint visit counts, and/or other engagement metrics derived from the historical interaction data and/or additional user-provided data.

In some cases, client device(s) 102 may provide a recap UI to present the recap information. In some examples, the recap UI may include one or more interface features or elements, such as a first interface feature or element that presents a list of the identified touchpoints, and/or a second interface feature or element that presents a synchronized map representation of the visitor-participant's movement throughout the venue. In some instances, client device(s) 102 may enable animated playback of the visit via the recap UI based on user selections and interactions with one or more portions of the recap UI (e.g., the first interface feature or element that presents the list of identified touchpoints). Additionally, or alternatively, the recap UI may include a shareable day-recap interface formatted for electronic sharing, such as a story-style or vertically oriented summary layout, that presents branding information for the application, identifying information for the destination venue, one or more summary metrics of the visit arranged in a plurality of tiles or cards, one or more touchpoint-specific counts, and one or more interface elements configured to initiate sharing of the day recap and/or to present a corresponding route associated with the visit.

Client device(s) 102 may be configured to communicate with a network 110 via one or more communication devices. The communication device(s) may include, for example, a cable modem, a satellite television (TV) transceiver, a router, an access point, a network interface card, an antenna, etc. The client device(s) 102 may communicate with the communication device(s) over a link. The link may include one or more wireless connections (e.g., WIFI, etc.) and/or one or more wired connections.

Network 110 can include one or more public and/or private networks. In some examples, the network 110 can include, without limitation, the Internet, a wide area network (WAN), a backbone network, a cloud network, a local area network (LAN), a datacenter network, a network segment, an Internet Service Provider (ISP) network, a wireless LAN, an intranet, an extranet, a wired and/or wireless network such as a cellular network, a Bluetooth network or link, an infrared network or link, a WIFI network, etc., and/or any other short range, long range, local, regional, global communications mechanism, means, approach, protocol and/or network, or any combination(s) thereof.

Destination venue navigation environment 100 may include one or more destination venue management systems and one or more weather systems. In FIG. 1, destination venue navigation environment 100 includes destination venue management systems 130A, 130B, and 130N (collectively "destination venue management systems 130" hereinafter) and weather systems 140A, 140B, and 140N (collectively "weather systems 140" hereinafter). However, the number of destination venue management systems shown in FIG. 1 is merely one illustrative example provided for explanation purposes. In some examples, destination venue navigation environment 100 may include more destination venue management systems and/or weather systems than shown in FIG. 1. In some cases, destination venue navigation environment 100 may include fewer destination venue management systems and/or weather systems than shown in FIG. 1.

In some examples, the destination venue management system(s) 130 may be associated with a destination venue. The destination venue management system(s) 130 may be configured to manage, capture, and analyze real-time destination venue data and/or historical destination venue data associated with the destination venue. Further, destination venue management system(s) 130 may provide the real-time destination venue data and/or historical destination venue data to client device(s) 102 and/or system server(s) 120.

As described herein, the historical destination venue data may identify and characterize, for one or more destination venues, historical destination venue conditions, such as, but not limited to, corresponding historical operational conditions (e.g., past attraction status changes, recorded downtimes, scheduled and unscheduled maintenance events, service interruptions, etc.), corresponding historical crowd flow patterns (e.g., high-traffic and low-traffic areas based on past visitor movement data, etc.), corresponding historical attendance statistics (e.g., past visitor volume, peak operating hours, seasonal fluctuations, and attendance trends based on time of day, day of the week, or event schedules), and/or corresponding historical touchpoint-specific analytics (e.g., past attraction wait times and queue lengths over different time intervals, historical venue heatmap data indicating fluctuating congestion levels, transaction-based demand data for retail and dining touchpoints (e.g., historically popular dining locations, merchandise stores, peak service times, menu item demand trends, historical average wait times at different food service locations, etc.), historical transportation and traffic related data (e.g., historical traffic patterns going into and/or out of the destination venue (e.g., historical peak congestion times, historical entrance and exit bottlenecks, and historical seasonal variations in vehicle traffic), and historical public transportation usage trends (e.g., bus usage trends, pricing, such as pricing of airlines, etc.), and the like) associated with the destination venue. In some instances, the destination venue data may include corresponding location data (e.g., geospatial coordinates, section identifiers) and time data (e.g., timestamps corresponding to past destination venue conditions).

The real-time destination venue data may identify and/or characterize real-time or current destination venue conditions of the destination venue. Examples of real-time destination venue conditions include, but are not limited to, current operational conditions (e.g., current attraction status changes, identified downtimes, scheduled and unscheduled maintenance events, service interruptions, etc.), current crowd flow patterns (e.g., high-traffic and low-traffic areas based on current visitor movement data, etc.), current attendance statistics (e.g., current visitor volume and current attendance trends), and/or current touchpoint-specific analytics (e.g., attraction wait times and queue lengths, current venue heatmap data indicating fluctuating congestion levels, transaction-based demand data for retail and dining touchpoints (e.g., current popular dining locations, current merchandise stores, peak service times, menu item demand trends, current average wait times at different food service locations, etc.), current transportation and traffic related data (e.g., current traffic patterns going into and/or out of the destination venue (e.g., current peak congestion times, current entrance and exit bottlenecks, and current seasonal variations in vehicle traffic), and current public transportation usage trends (e.g., bus usage trends), and the like) associated with the destination venue. In some instances, the real-time destination venue data may include corresponding location data (e.g., geospatial coordinates, section identifiers) and time data (e.g., timestamps corresponding to current and/or detected destination venue conditions).

In some cases, the weather computing system(s) 140 may be configured to manage, capture, and analyze real-time weather data and/or historical weather data of one or more regions of one or more destination venues. Further, weather system(s) 140 may provide the real-time weather data and/or historical weather data to client device(s) 102 and/or system server(s) 120. As described herein, historical weather data may include historical weather information. The historical weather information may include, but is not limited to, for one or more geographic regions of one or more destination venue areas, location data, corresponding recorded weather conditions, time data indicating timestamps associated with recorded weather conditions, corresponding historical temperature conditions (e.g., recorded high and low temperatures during prior visits), corresponding historical precipitation levels (e.g., frequency and intensity of rain, snow, or other adverse weather conditions), corresponding historical humidity levels and wind speeds, and/or shading and sun exposure trends across one or more regions of the destination venue. In some instances, client device(s) 102 may obtain historical weather data from one or more weather system(s) 140.

The real-time weather data may include real-time weather information. The real-time weather information may include, but is not limited to, for one or more geographic regions of one or more destination venue areas, location data, corresponding current temperature conditions, corresponding current precipitation levels (e.g., frequency and intensity of rain, snow, or other adverse weather conditions), corresponding current humidity levels and current wind speeds, and/or corresponding current shading and sun exposure trends. In some instances, the real-time weather data may include corresponding time data (e.g., timestamps of determined or detected weather conditions).

Destination venue navigation environment 100 may include one or more system servers 120. System server(s) 120 may operate to support client device(s) 102, destination venue management system(s) 130 and/or weather system(s) 140 from a remote location and/or network, such as a remote network, the cloud, a backend, a remote, or any distributed computing environment. It is noted that the structural and functional aspects of the system server(s) 120 may wholly or partially exist within the same or different system server(s).

In some examples, system server(s) 120 may include, host, operate, and/or implement one or more itinerary system(s) 122, one or more recap system(s) 123, one or more exit management system(s) 124, one or more lighting recommendation system(s) 126, one or more health recommendation system(s) 127, and/or one or more translation system(s) 128. Itinerary system(s) 122 may implement one or more itinerary generation processes. The itinerary generation process(es) may include, but are not limited to, generating, processing and/or analyzing historical interaction data associated with a visitor-participant. For instance, itinerary system(s) 122 may obtain, from client device(s) 102, location data (e.g., GPS data) including location information of the visitor-participant as the visitor-participant navigates around a destination venue and corresponding timestamps. Based on the location data, itinerary system(s) 122 may generate historical interaction data of the visitor-participant. The historical interaction data of a visitor-participant may include historical interaction information. The historical interaction information may identify and characterize previous interactions, engagements or visits with one or more touchpoints (e.g., amusement park touchpoints (e.g., rides, shows, eateries, food and beverage stations, themed zones, merchandise shops, concession stands, restrooms, etc.), national park touchpoints (e.g., scenic overlooks, hiking trails, visitor centers, restrooms, etc.), tradeshow touchpoints (e.g., interactive booths, learning spaces, etc.), arena touchpoints (e.g., restrooms, concession stands, merchandise shops, food and beverage stations, etc.), zoo touchpoints, aquarium touchpoints, botanical garden touchpoints, and local-event or hyper-local-event touchpoints, etc.) of one or more destination venues by the corresponding visitor-participant, and corresponding timestamps. Additionally, or alternatively, itinerary system(s) 122 may obtain historical interaction data of the visitor-participant from client device 102 the visitor-participant is operating or is associated with.

In some cases, itinerary system(s) 122 may generate historical interaction data of a visitor-participant based on user-provided data provided by the visitor-participant. In some instances, a visitor-participant may provide the user-provided data to client device(s) 102. Client device(s) 102 may provide the user-provided data to itinerary system(s) 122. As described herein, the user-provided data may include one or more inputs provided by the visitor-participant to client device(s) 102. The input(s) may be associated with one or more touchpoints of a destination venue and/or pathways between each of the one or more touchpoints. In some instances, the user-provided data may include check-in data.

As described herein, the itinerary generation processes may include generating an itinerary of a destination venue for a visitor-participant based on historical interaction data of the visitor-participant. The itinerary may identify one or more touchpoints of interest the visitor-participant may visit and/or engage with at a future point in time. In some instances, the itinerary may also identify pathways for the visitor-participant to use to go between the identified touchpoint(s) of interest.

In some examples, the itinerary generation processes may include determining, for an itinerary for a visitor-participant, one or more touchpoints of interest based on associated historical interaction data. For example, itinerary system(s) 122 may use one or more AI/ML models to determine the touchpoint(s) of interest for an itinerary of a destination venue for a visitor-participant and/or pathways between the touchpoint(s) of interest, based on associated historical interaction data. In some instances, a touchpoint of interest determined by itinerary system(s) 122 may be an attraction type touchpoint. For instance, itinerary system(s) 122 may process historical interaction data of a visitor-participant to identify one or more attraction type touchpoints (e.g., rides, shows, exhibits, performances) of a destination venue that a visitor-participant previously engaged with or visited, along with corresponding timestamps. Moreover, itinerary system(s) 122 may determine the frequency and/or duration of each engagement and/or visit to the identified attraction type touchpoints. Itinerary system(s) 122 may compare the frequency and/or duration of each engagement and/or visit of each attraction type touchpoint to one or more predetermined threshold criteria (e.g., a minimum engagement or visit frequency indicating a likelihood of continued interest in the attraction type touchpoint). If an attraction type touchpoint with a determined frequency and/or duration meets or exceeds the threshold criteria, itinerary system(s) 122 may determine such attraction type touchpoint is a touchpoint of interest for the itinerary. Otherwise, itinerary system(s) 122 may deprioritize or omit the attraction type touchpoint from the itinerary.

In some instances, a touchpoint of interest determined by itinerary system(s) 122 may be a purchase-related touchpoint. Itinerary system(s) 122 may process historical interaction data to identify one or more purchase-related touchpoints (e.g., food and beverage touchpoints, merchandise touchpoints, kiosks, restaurants, carts, food stands, merchandise shops, concession stands, and the like) of a destination venue that a visitor-participant previously engaged with or visited, along with corresponding timestamps. Moreover, itinerary system(s) 122 may determine the frequency and/or duration of each engagement and/or visit to the identified purchase-related touchpoint(s). Itinerary system(s) 122 may compare the determined frequency and/or duration of engagement of each identified purchase-related touchpoint to one or more predetermined threshold criteria (e.g., a minimum engagement or visit frequency indicating a likelihood of continued interest in the purchase-related touchpoint). Based on the comparison, itinerary system(s) 122 may determine historical purchasing preferences (e.g., frequently visited purchase-related touchpoints (e.g., a restaurant meeting or exceeding the threshold criteria), preferred food types, cuisine and/or merchandise, inferred from frequently visited purchase-related touchpoints, etc.). Itinerary system(s) 122 may identify purchase-related touchpoints that align with the determined purchasing preferences as touchpoints of interest, such as frequently visited purchase-related touchpoints and those associated with preferred food types, cuisine, or merchandise types.

In some instances, a touchpoint of interest determined by itinerary system(s) 122 may be an event type touchpoint. Itinerary system(s) 122 may process historical interaction data to identify one or more event type touchpoints (e.g., fireworks events, parades, live performances, seasonal events) a visitor-participant previously engaged with or visited, along with corresponding timestamps. Additionally, itinerary system(s) 122 may determine the frequency and/or duration of each engagement and/or visit to the identified event type touchpoint(s). Itinerary system(s) 122 may compare the determined frequency and/or duration of engagement of each identified event type touchpoint to one or more predetermined threshold criteria (e.g., a minimum engagement or visit frequency indicating a likelihood of continued interest in the event type touchpoint). If the determined frequency and/or duration for an identified event type touchpoint meets or exceeds the threshold criteria, itinerary system(s) 122 may determine such event type touchpoint is a touchpoint of interest for the itinerary. Otherwise, itinerary system(s) 122 may deprioritize or omit the event type touchpoint from the itinerary.

In some cases, the determination of the touchpoint(s) of interest may be based on additional user-provided data of the visitor-participant. Itinerary system(s) 122 may obtain the additional user-provided data from client device(s) 102. The additional user-provided data may include, but is not limited to, review data (e.g., data characterizing reviews related to touchpoint(s) the visitor-participant visited and/or engaged with), purchase data (e.g., data identifying and characterizing items purchased by a visitor-participant at a destination venue, such as food, beverages and/or merchandise), search data (e.g., data identifying and characterizing search queries), and preference data (e.g., data indicating one or more preferences associated with touchpoint(s) of a destination venue). As described herein, itinerary system(s) 122 may process additional user-provided data using one or more AI/ML models to determine one or more touchpoint(s) of interest for the itinerary and/or pathways between the touchpoint(s) of interest.

For example, itinerary system(s) 122 may compare the purchase data to one or more predetermined threshold criteria (e.g., a value corresponding to a minimum engagement and/or visit frequency indicating a likelihood of future engagement with a given touchpoint, such as a food and beverage touchpoint). Based on the comparison, itinerary system(s) 122 may determine one or more purchase-related preferences including, but not limited to, frequently visited food and beverage touchpoints and/or merchandise touchpoints (e.g., restaurants or retail locations that meet or exceed a predetermined threshold criteria), and/or preferred merchandise, food types and/or cuisine (e.g., identifying preferred food categories based on frequently visited food and beverage touchpoints, likelihood of future purchase of particular items at a particular period of time, etc.). Itinerary system(s) 122 may identify purchase-related touchpoint(s) (e.g., merchandise touchpoints and/or food and beverage touchpoints) that align with the purchase preferences. Itinerary system(s) 122 may determine such touchpoints as touchpoints of interest.

In another example, itinerary system(s) 122 may compare review data to one or more predetermined threshold criteria (e.g., a minimum engagement level indicating a likelihood of repeated interaction with a given touchpoint, such as an attraction touchpoint). Based on the comparison, itinerary system(s) 122 may determine one or more review-related preferences. Itinerary system(s) 122 may identify touchpoints (e.g., attraction type touchpoints, purchase-related touchpoints and/or event type touchpoints) that align with the review-related preferences. Itinerary system(s) 122 may determine such touchpoints as touchpoints of interest.

Examples of review-related preferences include, but not limited to, preferred attraction information (e.g., preferred type of attraction, particular attraction visitor-participant frequently visited and/or engaged with, etc.), preferred event information (e.g., preferred type of event, particular event visitor-participant frequently visited and/or engaged with, etc.), preferred merchandise information (e.g., preferred type of merchandise, price range, etc.), preferred food and/or beverage information (e.g., preferred food types and/or cuisine, preferred beverage types and/or cuisine, frequently visited food and/or beverage touchpoint, etc.), preferred movement information (e.g., preferred pathways, preferred types of pathways (e.g., shadier pathways), areas of the destination venue frequently visited, such as information identifying and/or characterizing, locations of areas associated with taking a picture or shaded areas for breaks, areas of the destination venue avoided, etc.), preferred temporal visit information (e.g., preferred dates and/or times of visits, average visit duration, inferred seasonal preferences associated with visiting the destination venue, such as visit patterns during holidays, festivals, or off-peak times, inferred time-of-day preferences associated with visiting the destination venue, such as morning visits versus evening visits, inferred time-of-day preferences associated with one or more touchpoints the visitor-participant visited, etc.), and other preference information (e.g., types of touchpoints frequently visited (e.g., rollercoaster rides, scenic overlooks, quiet rest areas, interactive exhibits, shows/performances, etc.), thematic preferences associated with touchpoints related to events and/or attractions (e.g., preference for sci-fi themed areas versus nature trails, etc.).

In another example, itinerary system(s) 122 may compare search data to one or more predetermined threshold criteria (e.g., minimum frequency of searches for a touchpoint category within a given time period). Based on the comparison, itinerary system(s) 122 may determine search-based preferences, including but not limited to, preferred attraction types based on search trends (e.g., frequent searches for thrill rides indicate a preference for high-intensity attractions), preferred food and beverage categories (e.g., repeated searches for "vegan options" indicate a dietary preference), preferred event or show types (e.g., searching for fireworks schedules indicates an interest in nighttime spectaculars), preferred movement patterns, inferred from searches for nearby touchpoints or optimized route suggestions, preferred temporal visit behaviors, based on search trends at specific times of day (e.g., searching for shaded areas in the afternoon may indicate heat sensitivity). Itinerary system(s) 122 may identify touchpoints (e.g., attraction type touchpoints, purchase-related touchpoints and/or event type touchpoints) that align with the search-based preferences. Itinerary system(s) 122 may determine such touchpoints as touchpoints of interest.

In another example, itinerary system(s) 122 may compare preference data to one or more predetermined threshold criteria (e.g., minimum engagement level indicating a strong likelihood of interaction with a given touchpoint). Based on the comparison, itinerary system(s) 122 may determine one or more preference-based recommendations, such as, but not limited to, touchpoints that align with the visitor-participant's explicitly stated or inferred preferences, dynamically ranked attraction recommendations based on past engagement patterns, optimal sequencing of touchpoints to match historical movement and wait-time preferences, and personalized itinerary adjustments based on environmental or time-of-day preferences. Itinerary system(s) 122 may identify touchpoints (e.g., attraction type touchpoints, purchase-related touchpoints and/or event type touchpoints) that align with the preference-based recommendations. Itinerary system(s) 122 may identify such touchpoints as touchpoints of interest.

In some examples, itinerary system(s) 122 may generate an itinerary for a destination venue based on historical weather data, as similarly described with respect to client device(s) 102. The historical weather data may be obtained from weather system(s) 140. As described herein, itinerary system(s) 122 may process the historical weather data, historical interaction data and/or additional user-provided data, to determine visitor-participant behavior patterns related to weather conditions. Moreover, itinerary system(s) 122 may identify one or more touchpoints of interest and/or determine pathways between touchpoints based on the visitor-participant behavior patterns. In some instances, itinerary system(s) 122 may use one or more AI/ML models to determine the visitor-participant behavior pattern(s) related to weather conditions based on the historical weather data, historical interaction data and/or additional user-provided data, and/or the touchpoint(s) of interest and/or pathway(s) based on the visitor-participant behavior pattern(s). For example, a visitor-participant's behavior pattern may indicate that they historically prefer shaded walking routes or indoor exhibits during high-temperature periods. In such an example, itinerary system(s) 122 may prioritize similar shaded or indoor touchpoints when comparable temperature conditions are predicted. In another example, a visitor-participant's behavior pattern may indicate that they historically extend their visits during cooler weather by engaging in evening performances or outdoor shows. In such an example, itinerary system(s) 122 may recommend evening attractions or adjust sequencing to include outdoor nighttime events when similar weather conditions are forecasted.

In some aspects, itinerary system(s) 122 may process historical destination venue data from destination venue management system 130 to generate an itinerary for a destination venue including, but not limited to, identifying, for the itinerary, one or more touchpoints of interest and/or pathways between touchpoints, as similarly described with respect to client device(s) 102. The historical destination venue data may be obtained from destination venue management system(s) 130 and may include the categories of venue condition information described herein. Itinerary system(s) 122 may process the historical destination venue data, alone or in combination with historical interaction data and/or additional user-provided data, to determine visitor-participant behavior patterns related to venue conditions. Moreover, itinerary system(s) 122 may identify one or more touchpoints of interest and/or determine pathways between touchpoints based on the visitor-participant behavior patterns. In some instances, itinerary system(s) 122 may use AI/ML model(s) to analyze the historical destination venue data and associated inputs to determine the touchpoint(s) of interest and/or pathway(s). For example, a visitor-participant's behavior pattern may indicate that they historically schedule dining shortly after attending thrill rides. In such an example, itinerary system(s) 122 may recommend dining touchpoints near roller coasters or sequence meals following high-intensity attractions. In another example, a visitor-participant's behavior pattern may indicate that they historically avoid retail areas during peak crowding hours. In such an example, itinerary system(s) 122 may adjust the itinerary to shift merchandise-related touchpoints to off-peak windows.

In some instances, itinerary system(s) 122 may determine a time to visit and/or a time of engagement for one or more touchpoints of interest included in an itinerary of a destination venue, as similarly described with respect to client device(s) 102. The determination may be based on historical interaction data of a visitor-participant, additional user-provided data, historical weather data, and/or historical destination venue data. Itinerary system(s) 122 may process these inputs to identify historical arrival and engagement patterns, congestion periods for specific touchpoints, visitor-participant preferences (e.g., preferred dining times), predicted popularity information, and/or predicted availability of touchpoints. Based on such determinations, itinerary system(s) 122 may recommend corresponding visit or engagement times for the identified touchpoints of interest. In some cases, itinerary system(s) 122 may recommend corresponding visit or engagement times for the identified touchpoint(s) of interest using AI/ML model(s).

For example, the historical arrival and engagement patterns may indicate the visitor-participant has historically engaged in thrill rides early in the day and slower-paced experiences later. In such example, itinerary system(s) 122 may recommend times to visit and/or engage with thrill rides and slower-paced experiences in accordance with the historical arrival and engagement patterns. In another example, the congestion periods for one or more touchpoints of interest identified in an itinerary may indicate, for a particular roller-coaster ride, there may be shorter wait times in the early afternoon. In such example, itinerary system(s) 122 may recommend a time to visit and/or engage with the roller-coaster during the early afternoon time. In another example, the preference data may indicate a visitor-participant consistently purchases coffee in the mid-morning. In such example, itinerary system(s) 122 may recommend a time to visit and/or engage with a touchpoint of interest that provides coffee during the mid-morning period based on the preference data. In another example, historical destination venue data and/or preference data may indicate a carnival game historically reaches capacity or experiences downtime at certain times of the day. In such example, itinerary system(s) 122 may recommend times to visit and/or engage with the carnival game at an optimal timeframe when engagement likelihood is highest (e.g., when the capacity of the carnival game is at its lowest or when the carnival game will likely not be experiencing downtime, such as maintenance) based on the historical destination venue data and/or the preference data.

In some aspects, itinerary system(s) 122 may determine a sequence/order of identified touchpoint(s) of interest of an itinerary based on the recommended visit or engagement times for identified touchpoint(s) of interest, as similarly described with respect to client device(s) 102. As described herein, the sequence or order of the identified touchpoint(s) of interest may be optimized to minimize travel distances, avoid congestion-prone areas, and/or enhance the visitor experience. For example, itinerary system(s) 122 may recommend a show of interest be visited in the early morning based on historical destination venue data indicating typical performance schedules, and/or historical weather data identifying favorable conditions for early attendance. Further, itinerary system(s) 122 may recommend the show be earlier in the itinerary, followed by adjacent attractions of interest that historically open around the same time based on historical destination venue data indicating those attractions historically open around the same time, and/or historical interaction data of the visitor-participant showing a preference for visiting nearby attractions consecutively. In another example, itinerary system(s) 122 may determine that the visitor-participant historically prefers high-energy experiences first based on historical interaction data. Based on such determination, itinerary system(s) 122 may sequence thrill rides before sit-down dining or scenic pathways.

In some instances, itinerary system(s) 122 may optimize the ordering of the identified touchpoint(s) using historical movement information included in historical interaction data, as similarly described with respect to client device(s) 102. As described herein, the historical movement information may include movement preferences, such as whether the visitor-participant prefers less crowded routes, scenic pathways, or direct routes between attractions.

In some cases, itinerary system(s) 122 may adjust an itinerary for a destination venue dynamically based on real-time weather data and/or real-time destination venue data, as similarly described with respect to client device(s) 102. As described herein, the real-time destination venue data may be obtained from destination venue management system(s) 130 and may identify and characterize current venue conditions (e.g., operational status of attractions, crowd flow patterns, attendance statistics, touchpoint-specific analytics, and transportation or traffic information). The real-time weather data may be obtained from weather system(s) 140 and may identify and characterize current weather conditions (e.g., temperature, precipitation, humidity, wind speed, or sun exposure trends). Further, real-time venue and/or real-time weather data may include corresponding location data (e.g., geospatial coordinates, section identifiers) and time data (e.g., timestamps associated with detected conditions). Based on the real-time weather data and/or real-time destination venue data, itinerary system(s) 122 may determine one or more adjustments to the itinerary, such as but not limited to reordering touchpoint(s) of interest, modifying estimated visit times of touchpoint(s) of interest, adding or removing touchpoint(s) of interest, and replacing touchpoint(s) of interest with alternative touchpoint(s) of interest. Itinerary system(s) 122 may apply the adjustment(s) to one or more of the touchpoints of interest included in the itinerary.

In some aspects, itinerary system(s) 122 may generate an itinerary of a destination venue for a visitor-participant based on social-generated itinerary data associated with other visitor-participants (e.g., touchpoint(s) of interest and/or pathways for the touchpoint(s) of interest and corresponding recommended times to visit and/or engagement times). In some cases, the social-generated itinerary information associated with other visitor-participants may be generated by client device(s) 102 and/or system server(s) 120 based on associated historical interaction data, additional user-provided data, historical weather data, and historical destination venue data.

In some instances, itinerary system(s) 122 may generate a personalized itinerary for a visitor-participant based on the visitor-participant's historical interaction data, additional user-provided data, historical weather data, and/or historical destination venue data. In some examples, itinerary system(s) 122 may integrate one or more portions of the social-generated itinerary data into the personalized itinerary based on the visitor-participant's historical interaction data, additional user-provided data, historical weather data, and/or historical destination venue data. In some cases, itinerary system(s) 122 may continuously refine the personalized or combined itinerary (e.g., an itinerary incorporating the personalized itinerary and one or more portions of the social-generated itinerary data) based on real-time destination venue conditions, real-time weather data, visitor movement tracking, and/or associated preferences, ensuring that the itinerary of the visitor-participant remains optimized and adaptive throughout the visit.

Recap System(s) 123 may implement one or more recap processes. The recap process(es) may include processing historical interaction data (e.g., movement patterns, historical path data, etc.) of a visitor-participant and/or additional user-provided data (e.g., check-in data, review data, etc.) of the visitor-participant to generate recap information. The recap information may include information identifying and characterizing a recap of a visit of a destination venue by a visitor-participant, as similarly described with client device(s) 102. Additionally, or alternatively, recap system(s) 123 may cause presentation of a shareable day-recap interface that includes application branding, destination-venue identifying information, one or more visit-summary metrics, one or more touchpoint-specific counts, and one or more interface elements configured to initiate sharing and/or to present route information associated with the visit.

In some cases, recap system(s) 123 may provide a recap UI to client device 102 of a visitor-participant. The client device 102 may provide or present the recap UI. The recap UI may display one or more portions of the recap information. In some examples, the recap UI may include one or more interface features or elements, such as an interface feature or element that presents a list of the identified touchpoints, and/or an interface feature or element that presents a synchronized map representation of the visitor-participant's movement throughout the venue. In some instances, client device(s) 102 may enable animated playback of the visit via the recap UI based on user selections and interactions with one or more portions of the recap UI (e.g., the interface feature or element that presents the list of identified touchpoints).

Exit management system(s) 124 may determine or generate one or more exit recommendations, as similarly described with respect to client device(s) 102. The exit recommendation(s) may be generated based on a visitor-participant's itinerary, historical interaction data, additional user-provided data, historical destination venue data, historical weather data, and/or real-time destination venue and/or weather data. In some cases, exit management system(s) 124 may provide corresponding recommendations to client device(s) 102 for presentation, including suggested exit times, exit point selections, and/or recommended pathways. Exit management system(s) 124 may integrate the exit recommendation into the itinerary to optimize departure timing and routing, as similarly described with client device(s) 102. For example, exit management system(s) 124 may further generate rerouting suggestions to avoid high-congestion areas or direct the visitor-participant to alternative exits when primary exits are crowded, closed, or otherwise unavailable.

Lighting recommendation system(s) 126 may implement one or more lighting recommendation processes to determine one or more lighting recommendations for photography purposes. For example, lighting recommendation system(s) 126 may identify one or more potential photography locations within the destination venue for a visitor-participant based on historical destination venue data (e.g., historical crowd related information, such as crowd flows), real-time destination venue data (e.g., current crowd related information), location data of other visitor-participants, historical weather data (e.g., historical weather and/or lighting conditions, such as sun positioning information), and/or real-time weather data (e.g., real-time weather and/or lighting conditions, such as sun positioning information). Further, lighting recommendation system(s) 126 may generate, for the visitor-participant, a lighting recommendation identifying and/or characterizing the potential photography locations within the destination venue. In some instances, lighting recommendation system(s) 126 may provide augmented reality (AR) overlays within a UI to visually guide visitor-participant to the recommended photo spots and assist in aligning the camera for ideal composition.

Health recommendation system(s) 127 may implement one or more health recommendation processes to determine one or more health-related recommendations associated with a visit of a destination venue by a visitor-participant. For example, health recommendation system(s) 127 may process the health data (e.g., real-time heart rate data, activity level data, or health data indicating signs of fatigue) obtained from a health monitoring device operatively coupled to the visitor-participant, along with other data, such as, the historical interaction data of the visitor-participant, additional user-provided data of the visitor-participant, historical weather data, historical destination venue data, real-time weather data, and/or real-time destination venue data to determine health-related recommendations for the visitor-participant. The health-related recommendations may be associated with one or more health related metrics associated with the visitor-participants visit or engagement with one or more touchpoints of the destination venue. In some aspects, health recommendation system(s) 127 may adjust a visitor-participant's itinerary based on health-related recommendations of the visitor-participant.

For example, health recommendation system(s) 127 may process the health data (e.g., real-time heart rate data, activity level data, or health data indicating signs of fatigue) to determine the visitor-participant may have exertion levels over a predetermined exertion level threshold corresponding to over exertion by the visitor-participant. Health recommendation system(s) 127 may recommend rest periods, shaded pathways, lower-intensity attractions, lower exertion routes, indoor attractions and/or hydration reminders.

Translation system(s) 128 may implement one or more translation processes to obtain content in a first language, such as audio data of spoken words or sentences, or a script of a show and generate a translation of the content into a second language. Further, the content may be obtained from client device(s) 102 and/or a computing system (e.g., destination venue management system 130). The translation process(es) may include providing real-time language translation and contextual subtitle overlays on a UI provided by translation system(s) 128. For example, audio data in a first language may be generated from one or more sensors operatively coupled to client device(s) 102. Translation system(s) 128 may obtain the audio data from client device 102. Moreover, translation system(s) 128 may translate the audio data into a second language. In some instances, the translation system(s) 128 may generate synchronized subtitles or translated text overlays on a UI displayed by client device 102 of a visitor-participant. In some cases, the second language may be indicated by the visitor-participant as the preferred language (e.g., from preference data).

In some cases, itinerary system(s) 122, recap system(s) 123, exit management system(s) 124, lighting recommendation system(s) 126, health recommendation system(s) 127, and/or translation system(s) 128 may use one or more artificial intelligence (AI) and/or machine learning (ML) models or algorithms to perform their respective functions, including determining or identifying touchpoint(s) of interest for an itinerary, associated pathway(s), one or more adjustments to an itinerary, one or more portions of social-generated itinerary data to be incorporated into a personalized itinerary, one or more recap outputs, one or more exit recommendations, one or more lighting recommendations, one or more health-related recommendations, and/or one or more translation-related outputs. Examples of the AI/ML model(s) or algorithm(s) these systems may use include, but are not limited to, recurrent neural network (RNN) models, long short-term memory (LSTM) models, collaborative filtering models (e.g., matrix factorization or neural collaborative filtering), reinforcement learning (RL) models (e.g., Deep Q-Learning, Proximal Policy Optimization), graph neural networks (GNNs) (e.g., for route optimization, spatial awareness, or health-conscious path optimization), path optimization models, supervised learning models (e.g., random forest, gradient boosting, XGBoost, decision trees), unsupervised learning models (e.g., k-means clustering, DBSCAN, hierarchical clustering), natural language processing (NLP) models (e.g., transformers, BERT, etc.), weather-aware predictive models (e.g., regression, time series analysis models, deep learning forecasting models), queue prediction models (e.g., time series models, Bayesian inference models, Hidden Markov Models, LSTMs, RL-based models), multi-agent systems (e.g., swarm intelligence, game theory models), social-generated itinerary ranking models, dynamic itinerary adjustment models (e.g., Bayesian networks), time series forecasting models (e.g., ARIMA), computer vision models (e.g., convolutional neural networks (CNNs), vision transformers, YOLO, Faster R-CNN), physiological and biometric data analysis models, wearable data and movement analysis models (e.g., Hidden Markov Models), weather and environmental health risk models (e.g., regression, time series forecasting), anomaly detection models (e.g., autoencoders, isolation forest, one-class SVMs), and clustering algorithms.

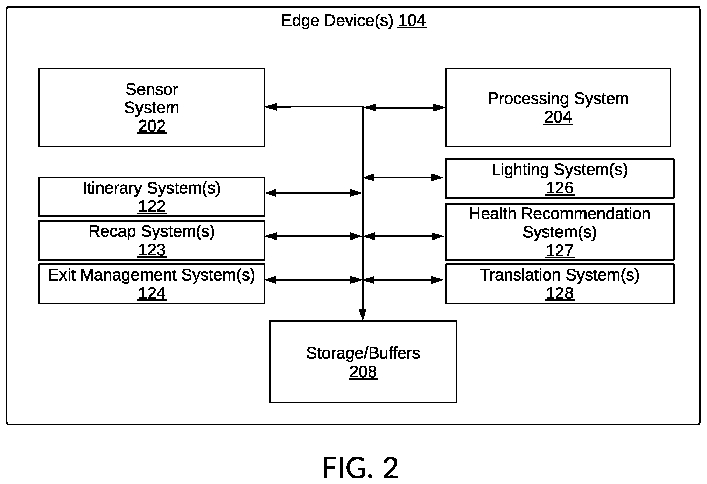

In some examples, client device(s) 102 may include, implement and/or host a respective copy or version of itinerary system(s) 122, recap system(s) 123, exit management system(s) 124, lighting recommendation system(s) 126, health recommendation system(s) 127, and/or translation system(s) 128 as shown in FIG. 2. Moreover, itinerary system(s) 122, recap system(s) 123, exit management system(s) 124, lighting recommendation system(s) 126, health recommendation system(s) 127, and/or translation system(s) 128 may each include, implement, and/or host one or more servers, computers, models and/or neural networks (e.g., artificial intelligence (AI) and/or machine learning (ML) models and/or neural networks, statistical models, etc.), algorithms, software applications, software engines, software modules, software services, software code/logic, software components, processors and/or processing circuitry (e.g., central processing units (CPUs), digital signal processors (DSPs), graphics processing units (GPUs), image signal processors (ISPs), microprocessors, processor cores, system-on-chip (SOC) devices, applicationspecific integrated circuits (ASICs), field-programmable gate arrays (FPGAs), integrated circuits, etc.), software and/or hardware elements, software platforms, and/or any other hardware and/or software components.

FIG. 2 illustrates a block diagram of an example of the client device(s) 102, according to some embodiments of the present disclosure. In FIG. 2, the client device(s) 102 represent a single edge device. Moreover, client device(s) 102, in FIG. 2 may include a sensor system 202, a processing system 204, and storage/buffers 208. In some instances, sensor system 202 may include one or more sensors, such as audio sensors (e.g., dynamic microphones, condenser microphones, electret microphones (ECM), microelectromechanical system microphones, piezoelectric microphones, carbon microphones, etc.)

In some cases, client device(s) 102 may optionally include, implement, and/or host a copy or version of one or more of itinerary system(s) 122, recap system(s) 123, exit management system(s) 124, lighting recommendation system(s) 126, health recommendation system(s) 127, and/or translation system(s) 128, as shown in FIG. 2. In some instances, such system(s) may enable client device(s) 102 to perform some or all of the operations, tasks, functions, and/or actions described herein with respect to itinerary system(s) 122, recap system(s) 123, exit management system(s) 124, lighting recommendation system(s) 126, health recommendation system(s) 127, and/or translation system(s) 128, in addition to or instead of corresponding operations performed by system server(s) 120 shown in FIG. 1.

In some cases, itinerary system(s) 122 may be a localized version, a client-side version, a standalone version, and/or a lightweight version of itinerary system(s) 122 implemented at the system server(s) 120. For instance, the localized version may be designed to operate with reduced data size, fewer components, features, functions, modules, libraries, or capabilities, or a smaller code package relative to itinerary system(s) 122 hosted at the system server(s) 120.

In some aspects, recap system(s) 123 may be a localized version, a client-side version, a standalone version, and/or a lightweight version of recap system(s) 123 implemented at the system server(s) 120. For instance, the localized version may be designed to operate with reduced data size, fewer components, features, functions, modules, libraries, or capabilities, or a smaller code package relative to recap system(s) 123 hosted at the system server(s) 120.

In some examples, exit management system(s) 124 may be a localized version, a client-side version, a standalone version, and/or a lightweight version of exit management system(s) 124 implemented at the system server(s) 120. For instance, the localized version may be designed to operate with reduced data size, fewer components, features, functions, modules, libraries, or capabilities, or a smaller code package relative to exit management system(s) 124 hosted at the system server(s) 120.

In some examples, lighting recommendation system(s) 126 may be a localized version, a client-side version, a standalone version, and/or a lightweight version of lighting recommendation system(s) 126 implemented at the system server(s) 120. For instance, the localized version may be designed to operate with reduced data size, fewer components, features, functions, modules, libraries, or capabilities, or a smaller code package relative to lighting recommendation system(s) 126 hosted at the system server(s) 120.

In some examples, health recommendation system(s) 127 may be a localized version, a client-side version, a standalone version, and/or a lightweight version of health recommendation system(s) 127 implemented at the system server(s) 120. For instance, the localized version may be designed to operate with reduced data size, fewer components, features, functions, modules, libraries, or capabilities, or a smaller code package relative to health recommendation system(s) 127 hosted at the system server(s) 120.

### Generation of an Itinerary of a Destination Venue for a Visitor-participant

As described herein, client device(s) 102 and/or system server(s) 120 may process historical interaction data of a visitor-participant to generate, for the visitor-participant, an itinerary for a destination venue at a scheduled time. In some examples, client device(s) 102 and/or system server(s) 120 may implement itinerary generation process(es) to generate the itinerary for the destination venue at the scheduled time based on the historical interaction data of the visitor-participant. The itinerary may identify one or more touchpoints of interest the visitor-participant may visit and/or engage with at a future point in time (e.g., amusement park touchpoints (e.g., rides, shows, eateries, food and beverage stations, themed zones, merchandise shops, concession stands, restrooms, etc.), national park touchpoints (e.g., scenic overlooks, hiking trails, visitor centers, restrooms, etc.), tradeshow touchpoints (e.g., interactive booths, learning spaces, etc.), arena touchpoints (e.g., restrooms, concession stands, merchandise shops, food and beverage stations, etc.), zoo touchpoints, aquarium touchpoints, botanical garden touchpoints, and local-event or hyper-local-event touchpoints, etc.). In some cases, the itinerary may also identify pathways for the visitor-participant to use to go between the identified touchpoint(s) of interest.

In some aspects, the itinerary generation process(es) may include generating the historical interaction data client device(s) 102 and/or system server(s) 120 may process for the itinerary. As described herein, the historical interaction data of a visitor-participant may include historical interaction information. The historical interaction information may identify and characterize previous interactions, engagements or visits with one or more touchpoints of one or more destination venues by the corresponding visitor-participant, and corresponding timestamps.

In some instances, client device(s) 102 may implement process(es) as described herein to generate the historical interaction data. In such cases, client device(s) 102 may process the historical interaction data to generate for an associated visitor-participant, an itinerary of a destination venue at a scheduled date, or provide the historical interaction data to system server(s) 120. System server(s) 120 may process the historical interaction data for an associated visitor-participant to generate an itinerary of a destination venue at a scheduled date. Alternatively, client device(s) 102 may provide to system server(s) 120 location data (e.g., GPS data) including location information of the visitor-participant as the visitor-participant navigates around a destination venue and corresponding timestamps. Based on the location data, itinerary system(s) 122 may generate historical interaction data of the visitor-participant, as described herein.

In some examples, the historical interaction data may be based on user-provided data provided by a corresponding visitor-participant. As described herein, the user-provided data may include one or more inputs provided by the visitor-participant to client device(s) 102. The input(s) may be associated with one or more touchpoints of a destination venue and/or pathways between each of the one or more touchpoints. In such examples, the visitor-participant may provide the user-provided data to client device(s) 102. Client device(s) 102 may generate the historical interaction data based on the user-provided data. Alternatively, client device(s) 102 may provide the user-provided data to system server(s) 120. System server(s) 120, such as itinerary system 122 may generate the historical interaction data based on the user-provided data.

For example, client device(s) 102 may receive one or more check-in related inputs associated with the visitor-participant via a check-in UI provided by a client device 102. Client device(s) 102 may generate check-in data based on the check-in related input(s). Moreover, client device(s) 102 may generate user-provided data including the check-in data. Further, client device(s) 102 and/or system server(s) 120 may generate historical interaction data based on the user-provided data including the check-in data of the visitor-participant.

In another example, the check-in related input(s) may be associated with whether the visitor-participant and/or client device(s) 102 operated by the visitor-participant is within one or more predetermined geofenced areas. Based on location data of the client device 102 and predetermined geofenced area(s) associated with touchpoint(s), client device 102 may detect whether client device 102 and/or the associated visitor-participant are within a geofenced area. In instances where client device 102 is determined/detected to be within the geofenced area for a predetermined period of time, client device 102 may determine the visitor-participant is at a touchpoint associated with the geofenced area. Moreover, client device 102 may generate corresponding check-in data indicating the presence of the visitor-participant at the particular touchpoint, including, but not limited to, location data of the visitor-participant at the time client device 102 determined/detected client device 102 was within the geofenced area, location data of the touchpoint, and/or corresponding timestamp(s). Further, client device(s) 102 and/or system server(s) 120 may generate historical interaction data based on the user-provided data including the check-in data of the visitor-participant.

In some cases, the itinerary generation processes may include determining one or more touchpoints of interest and/or associated pathway(s) between the touchpoint(s) for an itinerary for a visitor-participant based on associated historical interaction data. For example, client device(s) 102 and/or system server(s) 120 may use one or more AI/ML models to determine the touchpoint(s) of interest for an itinerary of a destination venue for a visitor-participant and/or pathways between the touchpoint(s) of interest, based on associated historical interaction data. In some instances, a touchpoint of interest may be an attraction type touchpoint. For instance, client device(s) 102 and/or system server(s) 120 may process historical interaction data of a visitor-participant to identify one or more attraction type touchpoints (e.g., rides, shows, exhibits, performances) of a destination venue that a visitor-participant previously engaged with or visited, along with corresponding timestamps. Moreover, client device(s) 102 and/or system server(s) 120 may determine the frequency and/or duration of each engagement and/or visit to the identified attraction type touchpoints. Client device(s) 102 and/or system server(s) 120 may compare the frequency and/or duration of each engagement and/or visit of each attraction type touchpoint to one or more predetermined threshold criteria (e.g., a minimum engagement or visit frequency indicating a likelihood of continued interest in the attraction type touchpoint). If an attraction type touchpoint with a determined frequency and/or duration meets or exceeds the threshold criteria, client device(s) 102 and/or system server(s) 120 may determine such attraction type touchpoint is a touchpoint of interest for the itinerary. Otherwise, itinerary system(s) 122 may deprioritize or omit the attraction type touchpoint from the itinerary.

In some instances, a touchpoint of interest may be a purchase-related touchpoint. Client device(s) 102 and/or system server(s) 120 may process historical interaction data to identify one or more purchase-related touchpoints (e.g., food and beverage touchpoints, merchandise touchpoints, kiosks, restaurants, carts, food stands, merchandise shops, concession stands, and the like) of a destination venue that a visitor-participant previously engaged with or visited, along with corresponding timestamps. Moreover, client device(s) 102 and/or system server(s) 120 may determine the frequency and/or duration of each engagement and/or visit to the identified purchase-related touchpoint(s). Client device(s) 102 and/or system server(s) 120 may compare the determined frequency and/or duration of engagement of each identified purchase-related touchpoint to one or more predetermined threshold criteria (e.g., a minimum engagement or visit frequency indicating a likelihood of continued interest in the purchase-related touchpoint). Based on the comparison, client device(s) 102 and/or system server(s) 120 may determine historical purchasing preferences (e.g., frequently visited purchase-related touchpoints (e.g., a restaurant meeting or exceeding the threshold criteria), preferred food types, cuisine and/or merchandise, inferred from frequently visited purchase-related touchpoints, etc.). Client device(s) 102 and/or system server(s) 120 may identify purchase-related touchpoints that align with the determined purchasing preferences as touchpoints of interest, such as frequently visited purchase-related touchpoints and those associated with preferred food types, cuisine, or merchandise types.

In some instances, a touchpoint of interest may be an event type touchpoint. Client device(s) 102 and/or system server(s) 120 may process historical interaction data to identify one or more event type touchpoints (e.g., fireworks events, parades, live performances, seasonal events) a visitor-participant previously engaged with or visited, along with corresponding timestamps. Additionally, client device(s) 102 and/or system server(s) 120 may determine the frequency and/or duration of each engagement and/or visit to the identified event type touchpoint. Client device(s) 102 and/or system server(s) 120 may compare the determined frequency and/or duration of engagement of each identified event type touchpoint to one or more predetermined threshold criteria (e.g., a minimum engagement or visit frequency indicating a likelihood of continued interest in the event type touchpoint). If an identified event type touchpoint with a frequency and/or duration that meets or exceeds the threshold criteria, client device(s) 102 and/or system server(s) 120 may determine such event type touchpoint is a touchpoint of interest for the itinerary. Otherwise, client device(s) 102 and/or system server(s) 120 may deprioritize or omit the event type touchpoint from the itinerary.

In some examples, the itinerary generation process(es) may include processing additional user-provided data of the visitor-participant to determine the touchpoint(s) of interest and/or associated pathway(s) between the touchpoint(s) for the itinerary. As described herein, client device(s) 102 and/or system server(s) 120 may process additional user-provided data using one or more AI/ML models to determine one or more touchpoint(s) of interest for the itinerary and/or pathways between the touchpoint(s) of interest. In instances where system server(s) 120 determine the touchpoint(s) of interest, system server(s) 120 may obtain the additional user-provided data from client device(s) 102.

In some instances, the additional user-provided data may include, but is not limited to, purchase data (e.g., data identifying and characterizing items purchased by a visitor-participant at a destination venue, such as food, beverages and/or merchandise). In such instances, client device(s) 102 and/or system server(s) 120 may determine touchpoint(s) of interest based on the purchase data. For instance, client device(s) 102 and/or system server(s) 120 may compare the purchase data to one or more predetermined threshold criteria (e.g., a value corresponding to a minimum engagement and/or visit frequency indicating a likelihood of future engagement with a given touchpoint, such as a food and beverage touchpoint). Based on the comparison, client device(s) 102 and/or system server(s) 120 may determine one or more purchase-related preferences including, but not limited to, frequently visited food and beverage touchpoints and/or merchandise touchpoints (e.g., restaurants or retail locations that meet or exceed a predetermined threshold criteria), and/or preferred merchandise, food types and/or cuisine (e.g., identifying preferred food categories based on frequently visited food and beverage touchpoints). Client device(s) 102 and/or system server(s) 120 may identify purchase-related touchpoint(s) (e.g., merchandise touchpoints and/or food and beverage touchpoints) that align with the purchase preferences. Itinerary system(s) 122 may determine such touchpoints as touchpoints of interest.

In some instances, the additional user-provided data may include, but is not limited to, review data (e.g., data characterizing reviews related to touchpoint(s) the visitor-participant visited and/or engaged with). In such instances, client device(s) 102 and/or system server(s) 120 may determine touchpoint(s) of interest based on the review data. For instance, client device(s) 102 and/or system server(s) 120 may compare review data to one or more predetermined threshold criteria (e.g., a minimum engagement level indicating a likelihood of repeated interaction with a given touchpoint, such as an attraction touchpoint). Based on the comparison, client device(s) 102 and/or system server(s) 120 may determine one or more review-related preferences. Client device(s) 102 and/or system server(s) 120 may identify touchpoints (e.g., attraction type touchpoints, purchase-related touchpoints and/or event type touchpoints) that align with the review-related preferences. Client device(s) 102 and/or system server(s) 120 may determine such touchpoints as touchpoints of interest.

Examples of review-related preferences include, but not limited to, preferred attraction information (e.g., preferred type of attraction, particular attraction visitor-participant frequently visited and/or engaged with, etc.), preferred event information (e.g., preferred type of event, particular event visitor-participant frequently visited and/or engaged with, etc.), preferred merchandise information (e.g., preferred type of merchandise, price range, etc.), preferred food and/or beverage information (e.g., preferred food types and/or cuisine, preferred beverage types and/or cuisine, frequently visited food and/or beverage touchpoint, etc.), preferred movement information (e.g., preferred pathways, preferred types of pathways (e.g., shadier pathways), areas of the destination venue frequently visited, such as information identifying and/or characterizing, location of areas associated with taking a picture or shaded areas for breaks, areas of the destination venue avoided, etc.), preferred temporal visit information (e.g., preferred dates and/or times of visits, average visit duration, inferred seasonal preferences associated with visiting the destination venue, such as visit patterns during holidays, festivals, or off-peak times, inferred time-of-day preferences associated with visiting the destination venue, such as morning visits versus evening visits, inferred time-of-day preferences associated with one or more touchpoints the visitor-participant visited, etc.), and other preference information (e.g., types of touchpoints frequently visited (e.g., rollercoaster rides, scenic overlooks, quiet rest areas, interactive exhibits, shows/performances, etc.), thematic preferences associated with touchpoints related to events and/or attractions (e.g., preference for sci-fi themed areas versus nature trails, etc.).

In some instances, the additional user-provided data may include, but is not limited to, search data (e.g., data identifying and characterizing search queries). In such instances, client device(s) 102 and/or system server(s) 120 may determine touchpoint(s) of interest based on the search data. For instance, client device(s) 102 and/or system server(s) 120 may compare search data to one or more predetermined threshold criteria (e.g., minimum frequency of searches for a touchpoint category within a given time period). Based on the comparison, client device(s) 102 and/or system server(s) 120 may determine search-based preferences, including but not limited to, preferred attraction types based on search trends (e.g., frequent searches for thrill rides indicate a preference for high-intensity attractions), preferred food and beverage categories (e.g., repeated searches for "vegan options" indicate a dietary preference), preferred event or show types (e.g., searching for fireworks schedules indicates an interest in nighttime spectaculars), preferred movement patterns, inferred from searches for nearby touchpoints or optimized route suggestions, preferred temporal visit behaviors, based on search trends at specific times of day (e.g., searching for shaded areas in the afternoon may indicate heat sensitivity). Client device(s) 102 and/or system server(s) 120 may identify touchpoints (e.g., attraction type touchpoints, purchase-related touchpoints and/or event type touchpoints) that align with the search-based preferences. Client device(s) 102 and/or system server(s) 120 may determine such touchpoints as touchpoints of interest.

In some instances, the additional user-provided data may include, but is not limited to, preference data (e.g., data indicating one or more preferences associated with touchpoint(s) of a destination venue). In such instances, client device(s) 102 and/or system server(s) 120 may determine touchpoint(s) of interest based on the preference data. For instance, client device(s) 102 and/or system server(s) 120 may compare preference data to one or more predetermined threshold criteria (e.g., minimum engagement level indicating a strong likelihood of interaction with a given touchpoint). Based on the comparison, client device(s) 102 and/or system server(s) 120 may determine one or more preference-based recommendations, such as, but not limited to, touchpoints that align with the visitor-participant's explicitly stated or inferred preferences, dynamically ranked attraction recommendations based on past engagement patterns, optimal sequencing of touchpoints to match historical movement and wait-time preferences, and personalized itinerary adjustments based on environmental or time-of-day preferences. Client device(s) 102 and/or system server(s) 120 may identify touchpoints (e.g., attraction type touchpoints, purchase-related touchpoints and/or event type touchpoints) that align with the preference-based recommendations. Client device(s) 102 and/or system server(s) 120 may identify such touchpoints as touchpoints of interest.

In some aspects, the itinerary generation process(es) may be performed by client device(s) 102 and/or system server(s) 120 to generate an itinerary for a destination venue based on historical weather data, as similarly described with respect to itinerary system(s) 122 and/or client device(s) 102. As described herein, the itinerary generation process(es) may include processing historical weather data to determine the touchpoint(s) of interest and/or associated pathway(s) between the touchpoint(s) for the itinerary. In some examples, the historical weather data may be obtained from weather system(s) 140. In some cases, the itinerary generation process(es) may include processing historical weather data, historical interaction data and/or additional user-provided data to determine visitor-participant behavior patterns related to weather conditions. Moreover, the itinerary generation process(es) may include identifying one or more touchpoints of interest and/or determining pathways between touchpoints based on the visitor-participant behavior patterns. In some instances, the itinerary generation process(es) may include using AI/ML model(s) to determine the visitor-participant behavior pattern(s) related to weather conditions based on the historical weather data, historical interaction data and/or additional user-provided data, and/or the touchpoint(s) of interest and/or pathway(s) based on the visitor-participant behavior pattern(s). For example, a visitor-participant's behavior pattern may indicate that they historically seek out waterbased attractions or cooling areas on days with elevated humidity. In such an example, client device(s) 102 and/or system server(s) 120 may recommend similar humidity-adaptive touchpoints when comparable conditions are forecasted. In another example, a visitor-participant's behavior pattern may indicate that they historically avoid visiting outdoor performance venues when strong winds are present. In such an example, client device(s) 102 and/or system server(s) 120 may deprioritize or omit comparable outdoor venues when windy conditions are predicted.

In some cases, the itinerary generation process(es) may be performed by client device(s) 102 and/or system server(s) 120 to generate an itinerary for a destination venue based on historical destination venue data, as similarly described with respect to client device(s) 102 and/or itinerary system(s) 122. The historical destination venue data may be obtained from destination venue management system(s) 130 and may include the categories of venue condition information described herein. The itinerary generation process(es) may include processing the historical destination venue data, alone or in combination with historical interaction data and/or additional user-provided data, to determine visitor-participant behavior patterns related to venue conditions. Moreover, itinerary generation process(es) may include identifying one or more touchpoints of interest and/or determining pathways between touchpoints based on the visitor-participant behavior patterns. In some instances, the itinerary generation process(es) may include using one or more AI/ML model(s) to analyze the historical destination venue data and associated inputs to determine the touchpoint(s) of interest and/or pathway(s). For example, a visitor-participant's behavior pattern may indicate that they historically prefer attending shows during periods of lower crowd density. In such an example, client device(s) 102 and/or system server(s) 120 may prioritize scheduling performances in timeslots associated with historically lighter attendance. In another example, a visitor-participant's behavior pattern may indicate that they historically take extended breaks after navigating high-congestion zones. In such an example, client device(s) 102 and/or system server(s) 120 may recommend inserting nearby rest areas or low-intensity attractions following known congestion points.

In some examples, the itinerary generation process(es) may be performed by client device(s) 102 and/or system server(s) 120 to determine a time to visit and/or a time of engagement for one or more touchpoints of interest included in an itinerary of a destination venue, as similarly described with respect to itinerary system(s) 122 and/or client device(s) 102. As described herein, the determination may be based on historical interaction data of a visitor-participant, additional user-provided data, historical weather data, and/or historical destination venue data. Client device(s) 102 and/or system server(s) 120 may process these inputs to identify historical arrival and engagement patterns, congestion periods for specific touchpoints, visitor-participant preferences (e.g., preferred dining times), predicted popularity information, and/or predicted availability of touchpoints. Based on such determinations, client device(s) 102 and/or system server(s) 120 may recommend corresponding visit or engagement times for the identified touchpoints of interest. In some cases, the itinerary generation process(es) may use AI/ML model(s) to determine the recommended times for the identified touchpoints of interest.

For example, historical interaction data may indicate that a visitor-participant tends to remain longer at evening performances compared to daytime attractions. In such an example, client device(s) 102 and/or system server(s) 120 may recommend extending or shifting the itinerary to include additional evening entertainment options. In another example, historical destination venue data may indicate that a water ride consistently experiences shorter wait times during late afternoon periods. In such an example, client device(s) 102 and/or system server(s) 120 may recommend scheduling that ride in the late afternoon to optimize waiting time. In another example, preference data may indicate that a visitor-participant has a recurring tendency to purchase lunch around midday. In such an example, client device(s) 102 and/or system server(s) 120 may recommend incorporating a dining-related touchpoint into the itinerary around noon, aligned with the visitor-participant's historical dining preferences. In another example, preference data and/or historical venue data may indicate that interactive exhibits or arcade-style attractions historically experience downtime or maintenance interruptions at certain times of the day. In such an example, client device(s) 102 and/or system server(s) 120 may recommend scheduling those attractions outside of the downtime window to maximize engagement likelihood.

In some aspects, the itinerary generation process(es) may be performed by client device(s) 102 and/or system server(s) 120 to determine a sequence or order of identified touchpoint(s) of interest of an itinerary, as similarly described with respect to client device(s) 102 and/or itinerary system(s) 122. As described herein, itinerary system(s) 122 may optimize the ordering of touchpoints using historical destination venue data and/or historical weather data to minimize travel distances, reduce exposure to congestion-prone areas, and/or improve overall visitor experience. For example, client device(s) 102 and/or system server(s) 120 may recommend scheduling a morning performance earlier in the itinerary based on historical destination venue data indicating typical show schedules and/or historical weather data suggesting favorable earlyday conditions for attendance. Further, client device(s) 102 and/or system server(s) 120 may recommend grouping adjacent attractions that historically open in the same time window, based on destination venue data describing attraction operating hours and/or historical interaction data reflecting a visitor-participant's tendency to visit nearby attractions consecutively. In another example, client device(s) 102 and/or system server(s) 120 may determine that a visitor-participant historically prefers beginning visits with physically active or high-energy attractions. Based on such determination, client device(s) 102 and/or system server(s) 120 may sequence thrill rides or outdoor adventures before sit-down dining or scenic pathways. In some instances, client device(s) 102 and/or system server(s) 120 may optimize the ordering of touchpoints using historical movement data or movement preferences, such as a visitor-participant's tendency to prefer shaded routes, less crowded pathways, or direct travel between attractions.

In some cases, the itinerary generation process(es) may be performed by client device(s) 102 and/or system server(s) 120 to determine one or more adjustments to an itinerary of a destination venue based on real-time weather data and/or real-time destination venue data, as similarly described with respect to client device(s) 102 and/or itinerary system(s) 122. As described herein, the real-time destination venue data may be obtained from destination venue management system(s) 130 and may identify and characterize current venue conditions (e.g., operational status of attractions, crowd flow patterns, attendance statistics, touchpoint-specific analytics, and transportation or traffic information). Moreover, the real-time weather data may be obtained from weather system(s) 140 and may identify and characterize current weather conditions (e.g., temperature, precipitation, humidity, wind speed, or sun exposure trends). The real-time venue and/or real-time weather data may further include corresponding location and timestamp information. Based on the real-time venue and/or real-time weather data, the itinerary generation process(es) may include determining one or more adjustments for an itinerary for a destination venue, as described herein. Further, the itinerary generation process(es) may include applying the adjustment(s) to one or more of the touchpoints of interest included in the itinerary.

In some instances, the adjustment(s) may include reordering the touchpoint(s) of interest identified for an itinerary. For example, client device(s) 102 and/or system server(s) 120 may adjust the sequence of attractions, dining locations, or scenic routes in accordance with current weather conditions of one or more regions of the destination venue (e.g., scheduling indoor attractions first if an unexpected rainstorm is detected). In another example, client device(s) 102 and/or system server(s) 120 may move a high-priority attraction to an earlier or later time to avoid peak wait times based on real-time congestion levels.

In some instances, the adjustment(s) may include modifying estimated visit times of the touchpoint(s) of interest identified for an itinerary. For example, client device(s) 102 and/or system server(s) 120 may delay or expedite certain touchpoints based on current weather conditions of one or more regions of the destination venue (e.g., shifting outdoor activities to earlier times if extreme heat is forecasted for later in the day). In another example, client device(s) 102 and/or system server(s) 120 may modify estimated visit times for scheduled touchpoints based on updated wait-time predictions or anticipated crowd fluctuations.

In some instances, the adjustment(s) may include adding one or more touchpoints of interest to an itinerary. For example, client device(s) 102 and/or system server(s) 120 may add new touchpoints that align with detected availability and real-time optimization strategies (e.g., inserting a dining reservation or break period if the system determines that crowding levels warrant an adjustment). In another example, client device(s) 102 and/or system server(s) 120 may add weather-adaptive touchpoints of interest that were not originally included in the itinerary (e.g., inserting a cool-down break at an air-conditioned indoor lounge if heat index levels exceed a predetermined threshold).

In some instances, the adjustment(s) may remove one or more touchpoints of interest identified for an itinerary. For example, client device(s) 102 and/or system server(s) 120 may remove one or more touchpoints of interest that are negatively impacted by current weather conditions, such as an outdoor performance canceled due to high winds, or a water attraction closed due to lightning detection. In another example, client device(s) 102 and/or system server(s) 120 may remove touchpoints that are unavailable or suboptimal due to operational status changes of the destination venue (e.g., a ride closure or overcapacity venue).

In some instances, the adjustment(s) may include replacing one or more touchpoints of interest with alternative recommendations. For example, client device(s) 102 and/or system server(s) 120 may replace a touchpoint with an alternative recommendation that aligns with detected weather conditions and inferred visitor preferences (e.g., suggesting a nearby covered dining area instead of an outdoor seating location). In another example, system server(s) 120 may replace one or more touchpoints with alternative recommendations that align with the visitor-participant's inferred preferences and current venue conditions (e.g., recommending a nearby low-traffic attraction in place of a highly congested attraction).

In some aspects, the itinerary generation process(es) may be performed by client device(s) 102 and/or system server(s) 120 to generate an itinerary of a destination venue for a visitor-participant based on social-generated itinerary data associated with other visitor-participants (e.g., touchpoint(s) of interest and/or pathways for the touchpoint(s) of interest and corresponding recommended times to visit and/or engagement times), as similarly described with respect to client device(s) 102 and/or itinerary system(s) 122. In some cases, the social-generated itinerary information associated with other visitor-participants may be generated by client device(s) 102 and/or system server(s) 120 based on associated historical interaction data, additional user-provided data, historical weather data, and historical destination venue data.

In some instances, such itinerary generation process(es) may include generating a personalized itinerary for a visitor-participant based on the visitor-participant's historical interaction data, additional user-provided data, historical weather data, and historical destination venue data. In some examples, itinerary generation process(es) may include integrating one or more portions of the social-generated itinerary data into the personalized itinerary of the visitor-participant based on the visitor-participant's historical interaction data, additional user-provided data, historical weather data, and historical destination venue data. In some cases, itinerary generation process(es) may continuously refine the personalized or combined itinerary (e.g., an itinerary incorporating the personalized itinerary and one or more portions of the social-generated itinerary data) based on real-time destination venue conditions, real-time weather data, visitor movement tracking, and associated preferences, ensuring that the itinerary of the visitor-participant remains optimized and adaptive throughout the visit.

In some examples, client device(s) 102 and/or system server(s) 120 may determine touchpoint(s) of interest at a first destination venue (e.g., an amusement park) based on historical interaction data associated with a visitor-participant's prior visit to a second destination venue (e.g., another amusement park). For instance, client device(s) 102 and/or system server(s) 120 may identify the visitor-participant's likely preferences at the second destination venue by analyzing behavioral patterns, engagement frequencies, and/or preference indicators derived from historical interaction data collected during that prior visit. In some cases, the first destination venue and the second destination venue may be different types of venues that nonetheless include analogous touchpoint categories, such as animal exhibits, aquatic exhibits, garden sections, scenic walking paths, temporary vendor areas, live demonstration areas, performance spaces, food and beverage areas, and merchandise locations. In some configurations, the first destination venue and the second destination venue may provide similar categories of touchpoints, such as thrill rides, family-friendly attractions, live performances, themed food and beverage locations, interactive exhibits, water features, parades, and character meet-and-greet areas. Client device(s) 102 and/or system server(s) 120 may determine a similarity between destination venues based on historical and/or real-time destination venue data describing touchpoints, categorization schemas, and operational or thematic attributes shared between the venues. Further, client device(s) 102 and/or system server(s) 120 may compare the visitor-participant's historical interaction data from the second destination venue with specific types of touchpoints at the first destination venue (e.g., high-frequency visits to roller coasters, preference for quick-service dining, or repeated engagement with nighttime shows) and identify corresponding or analogous touchpoints at the first destination venue. Based on this comparison, client device(s) 102 and/or system server(s) 120 may determine that those analogous touchpoints are likely to be of interest to the visitor-participant at the first destination venue.

In some examples, system server(s) 120 may provide an itinerary UI that presents information associated with an itinerary of a destination venue for a visitor-participant via display device(s) operatively coupled to client device(s) 102. The itinerary UI may include one or more interface features or elements. In some instances, the interface element(s) or feature(s) may include an interface element that presents the touchpoint(s) of interest identified in the itinerary. In some instances, the interface element(s) or feature(s) may include an interface element that presents a map representation of the destination venue associated with the itinerary. The map may include graphical representations of the touchpoint(s) of interest identified in the itinerary. In some instances, the map may include graphical representations of pathway(s) identified in the itinerary.

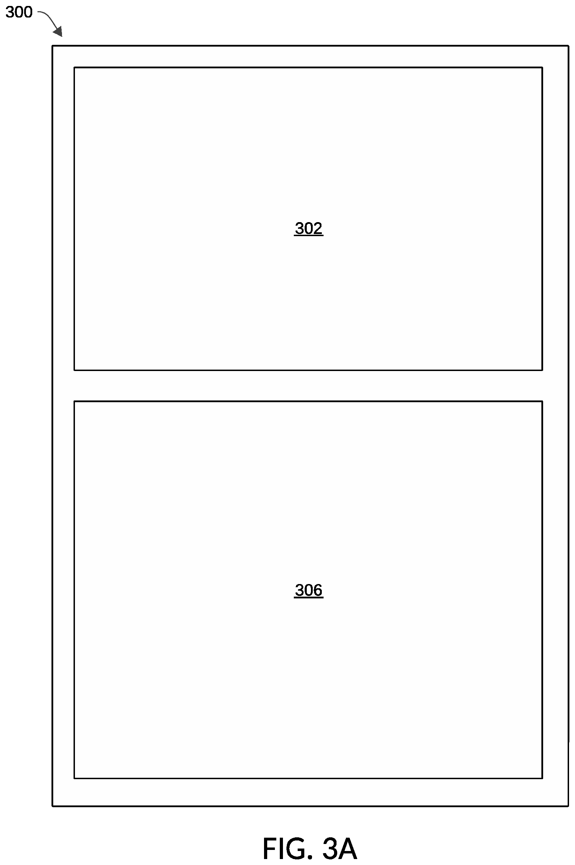

FIG. 3A illustrates an example itinerary UI. As illustrated in FIG. 3A, itinerary UI 300 may include interface element 302 and interface element 306. In some examples, interface element 302 may include a map representation of a destination venue associated with an itinerary generated for a visitor-participant. The map may include graphical representations of touchpoint(s) of interest identified in the itinerary. The map may include two-dimensional information or three-dimensional information. In some cases, interface element 306 may present the touchpoint(s) of interest identified in the itinerary. In some instances, a visitor-participant may engage or interact with interface element 306 to scroll through the identified touchpoint(s) of interest and/or to select one or more of the identified touchpoints of interest. Based on the engagement or interaction, interface element 302 may adjust the presentation of the map representation to focus on the graphical representation of the touchpoint of interest the visitor-participant selected or scrolled to.

### Generating a Recap Information of a Visit to a Destination Venue for a Visitor-participant

As described herein, client device(s) 102 and/or system server(s) 120, such as recap system(s) 123, may process historical interaction data (e.g., movement patterns, historical path data, etc.) of a visitor-participant and/or additional user-provided data (e.g., check-in data, review data, etc.) of the visitor-participant to generate recap information. The recap information may identify and characterize recap or summary of a visit of a destination venue by a visitor-participant, as previously described herein. Additionally, or alternatively, the recap information may include one or more summary metrics associated with the visit, such as a total number of steps, a total distance traveled within the destination venue, a count of attraction-type touchpoints visited, and/or touchpoint-specific counts for individual attraction-type touchpoints. In some instances, visitor-participants may share associated recap information with other visitor-participants via associated client devices 102.

In some cases, system server(s) 120, such as recap system(s) 123, may enable client device(s) 102 to provide a recap UI to associated visitor-participants. The recap UI may display one or more portions of the recap information. In some examples, the recap UI may include one or more interface features or elements, such as an interface feature or element that presents a list of the identified touchpoints, and/or an interface feature or element that presents a synchronized map representation of the visitor-participant's movement throughout the venue. In some instances, client device(s) 102 may enable animated playback of the visit via the recap UI based on user selections and interactions with one or more portions of the recap UI (e.g., the interface feature or element that presents the list of identified touchpoints). Additionally, or alternatively, the recap UI may include a shareable day-recap screen configured for presentation in a story-style format, such as a vertically oriented share card, the shareable day-recap screen including an application name and/or logo region, destination-venue identifying information, a plurality of summary-metric interface elements arranged in a multi-column layout, one or more interface elements identifying individual attraction-type touchpoints and corresponding counts, one or more controls configured to initiate sharing of the day recap, one or more controls configured to present route information associated with the visit, and one or more branding elements positioned within a lower region of the shareable day-recap screen.

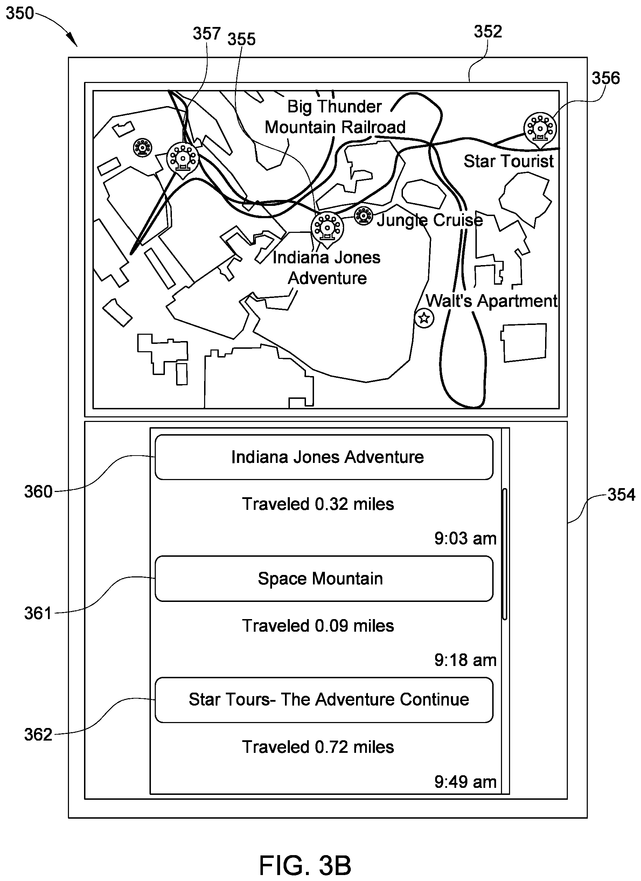

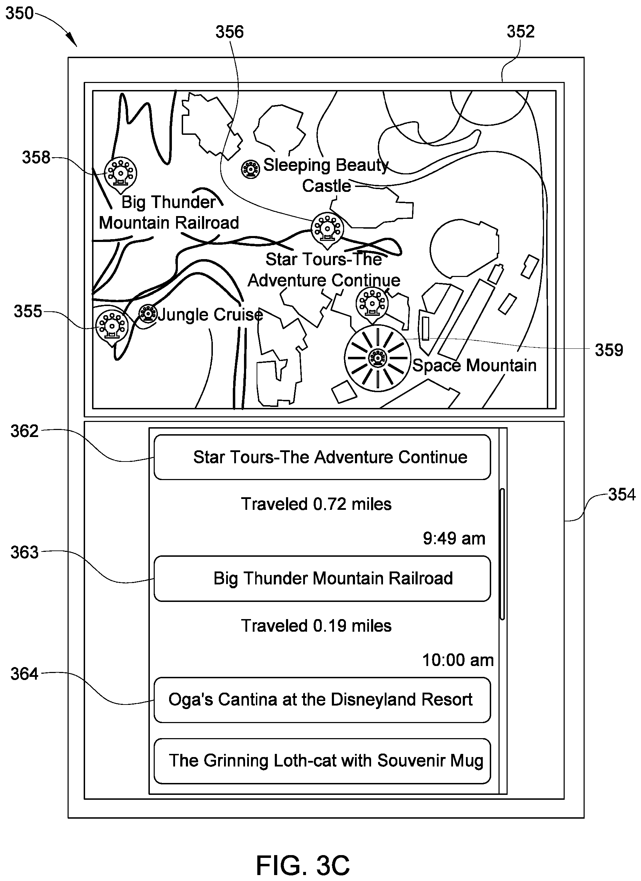

FIG. 3B and 3C illustrate an example recap UI. As illustrated in FIG. 3B and 3C, recap UI 350 may include interface element 352 and interface element 354. In some examples, interface element 352 may include a map representation of a destination venue a visitor-participant visited and/or engaged with. The map may include two-dimensional information or three-dimensional information. The map may include one or more interface elements that represent a touchpoint the visitor-participant visited and/or engaged with such as, interface element 355, interface element 356, interface element 357, interface element 358, and interface element 359. In some cases, interface element 352 may present touchpoint(s) the visitor-participant visited and/or engaged with. As illustrated in FIG. 3B and FIG. 3C, interface element 354 includes interface element 360, interface element 361, interface element 362, interface element 363 and interface element 364. Each of interface element 360, interface element 361, interface element 362, interface element 363 and interface element 364 may present information of a touchpoint the visitor-participant visited and/or engaged with. For example, one or more interface elements included in interface element 354 may correspond to respective interface elements shown in interface element 352. For instance, interface element 360 may include information for a touchpoint represented by interface element 355, interface element 361 may include information for a touchpoint represented by interface element 359, interface element 362 may include information for a touchpoint represented by interface element 356 , interface element 363 may include information for a touchpoint represented by interface element 358, and interface element 364 may include information for a touchpoint represented by an another interface element (not shown in FIG. 3B or FIG. 3C).

In some instances, a visitor-participant may engage or interact with interface element 354 and/or interface elements included in interface element 354 (e.g., interface element 360, interface element 361, interface element 362, interface element 363, and interface element 364) to scroll through the interface elements and/or to select one or more of the interface elements. Based on the engagement or interaction, interface element 352 may adjust the presentation of the map representation to focus on the interface element of the touchpoint of interest the visitor-participant selected or scrolled to. For instance, as illustrated in FIG. 3B, a visitor-participant may scroll to or select interface element 360. Based on such engagement or interaction, interface element 352 may focus on associated interface element 355. As illustrated in FIG. 3B, interface element 352 may present interface element 355 in the middle of the map. Additionally, a visitor-participant may scroll to or select interface element 362. Based on such engagement or interaction, interface element 352 may focus on associated interface element 356. As illustrated in FIG. 3C, interface element 352 may present interface element 356 in the middle of the map.

In some examples, system server(s) 120, such as recap system(s) 123, may enable a visitor-participant to share recap information with other visitor-participants within navigation environment 100. Client device(s) 102 of the other visitor-participants may display the shared recap information using a recap UI format similar to that used for the other visitor-participants' own recap information, as described herein. For example, recap UI displayed by client device 102A of a visitor-participant may present one or more portions of the recap information of another visitor-participant. The recap UI may include one or more interface features or elements, such as a chronological list of identified touchpoints, and a synchronized map representation of the other visitor-participant's movement through the venue. In some instances, the recap UI may support animated playback of the visit, triggered by the visitor-participant's interaction with the interface feature(s) or element(s). For instance, the visitor-participant may scroll through or select one or more touchpoints from a list of touchpoints the other visitor-participant visited or engaged with, via the recap UI. The visitor-participant's act of scrolling or selections may cause the recap UI to animate a corresponding path on the map representation (e.g., animated transitions representing the visitor-participant's movement from one touchpoint to another) and/or highlight a selected touchpoint on the map representation. In some configurations, the shared recap information may be presented in a condensed day-recap format that emphasizes visit-summary metrics, touchpoint-specific counts, and branding information in a story-style layout suitable for electronic sharing.

In some cases, the recap UI may include one or more interface elements or features that enable visitor-participant(s) to share their recap information with other visitor-participants of navigation environment 100. Based on interactions with such interface element(s) or feature(s) by the visitor-participant(s), system server(s) 120 may implement process(es) that provide the recap information of the visitor-participant to other visitor-participant(s), via corresponding client devices 102.

### Exit Determination Recommendations

As described herein, client device(s) 102 and/or system server(s) 120, such as exit management system(s) 124, may generate exit recommendation(s) for a visitor-participant based on historical and/or real-time venue data, historical and/or real-time weather data, location data from the visitor-participant's client device, location data from client devices of other visitor-participants, and/or itinerary data of other visitor-participants. In some examples, client device(s) 102 and/or system server(s) 120 may generate the exit recommendation before the visitor-participant's visit. Further, client device(s) 102 and/or system server(s) 120 may integrate the exit recommendation(s) into the itinerary to optimize departure timing and routing. In some aspects, client device(s) 102 and/or system server(s) 120 may generate exit recommendation(s) for a visitor-participant's itinerary during the visitor-participant's visit to the destination venue. Moreover, client device(s) 102 and/or system server(s) 120 may integrate the exit recommendation(s) into the itinerary of the visitor-participant to optimize departure timing and routing.

In some examples, exit management system(s) 124 may implement one or more crowd control processes based on real-time destination venue data and/or location data associated with visitor-participants. As described herein, the crowd control process(es) may include process(es) associated with monitoring, analyzing, and/or regulating the movement, distribution, and density of visitor-participants within a defined geographic area of a destination venue (e.g., amusement park, themed entertainment facility, national park, zoo, aquarium, botanical garden, festival site, fairground, neighborhood event area, or other similar high-traffic environment) to enhance safety, improve visitor experience, prevent congestion, preserve operational efficiency, and enable responsive itinerary adjustments.

In some cases, the crowd control process(es) may utilize current crowd flow analytics, such as real-time movement data, congestion indicators, and attendance statistics, which may be derived from real-time destination venue data. Moreover, the crowd control process(es) may include receiving location data from client devices 102 of visitor-participants (e.g., GPS data, Wi-Fi triangulation, Bluetooth-based positioning) that are part of navigation environment 100. This location data may enable fine-grained analysis of visitor-participant movement patterns, dwell times at specific locations, and overall directional flow. Further, the crowd control process(es) may include regulating the movement, distribution, and density of visitor-participants within a defined geographic area of a destination venue based on the real-time destination venue data and the location data.

For example, exit management system(s) 124 may reroute visitor-participant itineraries by instructing visitor-participants to avoid high-density areas (e.g., deprioritizing certain touchpoints or suggesting alternate pathways) via corresponding client devices 102. In another example, exit management system(s) 124 may recommend staggering visitation windows for popular touchpoint(s) or touchpoint(s) of interest. In another example, exit management system(s) 124 may recommend prioritizing distribution of visitor-participants toward underutilized areas of a destination venue (e.g., elevating recommendations for low-density touchpoints via client devices 102 of the visitor-participants). In another example, exit management system(s) 124 may activate virtual queuing systems or timed access protocols for specific touchpoint(s) of interest projected to exceed threshold occupancy levels. In another example, exit management system(s) 124 may provide real-time alerts or notifications (e.g., push notification to client devices 102). The real-time alerts or notifications may provide information of nearby congestion and alternative options.

In some aspects, exit management system(s) 124 may use AI/ML model(s) (e.g., time-series models, reinforcement learning, predictive flow models) to forecast near-term crowd flow patterns and anticipate congestion hotspots based on temporal trends, weather conditions, scheduled events, and historical interaction data. These models may continuously update and refine crowd control recommendations throughout the course of a visitor-participant's itinerary.

### Other Recommendations

As described herein, client device(s) 102 and/or system server(s) 120 may provide additional recommendations and/or services for a visitor-participant to improve the visit of a destination venue and/or engagement with one or more touchpoints of the destination venue. In some examples, client device(s) 102 and/or system server(s) 120 may process historical destination venue data (e.g., historical crowd related information, such as crowd flows), real-time destination venue data (e.g., current crowd related information), location data of other visitor-participants, historical weather data (e.g., historical weather and/or lighting conditions, such as sun positioning information), and/or real-time weather data (e.g., real-time weather and/or lighting conditions, such as sun positioning information) to determine one or more lighting recommendations for photography purposes. The lighting recommendation(s) may identify and/or characterize the potential photography locations within the destination venue. In some instances, client device(s) 102 and/or system server(s) 120 may provide augmented reality (AR) overlays within a UI to visually guide a visitor-participant to the recommended photo spots and assist in aligning the camera for ideal composition.

In some configurations, client device(s) 102 and/or system server(s) 120 may provide wait-time monitoring and alert services associated with one or more rides or other attraction-type touchpoints having associated queues or wait times. For example, a visitor-participant may provide, via client device(s) 102, an input selecting a touchpoint and establishing a threshold wait-time condition for that touchpoint, such that client device(s) 102 and/or system server(s) 120 may monitor real-time destination venue data to determine whether a current wait time associated with the touchpoint satisfies the threshold wait-time condition. In some instances, the threshold wait-time condition may correspond to a current wait time falling below a threshold wait-time value selected by the visitor-participant. In some examples, the threshold wait-time value may be selected from one or more preset threshold values presented via an interface of client device(s) 102 and/or may be provided as a custom value. Further, the interface may include one or more selectable interface elements, such as pill-shaped buttons, chips, toggles, or similar controls, for selecting the threshold wait-time value, and may optionally include an icon, such as a bell icon, indicating alert functionality. Example preset threshold values may include 15 minutes, 20 minutes, and 30 minutes, 10 minutes, 20 minutes, and 30 minutes, 15 minutes, 30 minutes, and 45 minutes, and/or other values or combinations thereof, it being understood that such values are illustrative and non-limiting.

In some examples, client device(s) 102 and/or system server(s) 120 may further determine one or more predicted or forecasted wait times associated with a ride or other attraction-type touchpoint based on historical destination venue data, current destination venue data, historical interaction data, event schedule data, weather data, crowd-flow information, and/or other inputs described herein. In some cases, one or more artificial intelligence and/or machine learning (AI/ML) models may be used to generate the predicted or forecasted wait times, such as one or more time-series forecasting models, queue prediction models, regression models, neural network models, reinforcement learning models, Bayesian models, or other predictive models configured to estimate future wait-time conditions for the touchpoint over a plurality of times during a visit period. In some aspects, client device(s) 102 and/or system server(s) 120 may provide, via a touchpoint-detail interface, information identifying the selected touchpoint, venue-location information associated with the touchpoint, a current wait time associated with the touchpoint, and one or more graphical representations of forecasted wait times over time, such as a chart, graph, curve, timeline, or other visual representation indicating predicted queue conditions for different times of day. In some instances, the touchpoint-detail interface may present the forecasted wait-time information and the threshold-based alert-setting interface together so that the visitor-participant may evaluate predicted lower-wait windows and establish a corresponding wait-time alert from the same interface.

In some cases, responsive to determining that the current wait time associated with the selected ride or other attraction-type touchpoint satisfies the threshold wait-time condition, client device(s) 102 and/or system server(s) 120 may generate a corresponding alert output for presentation via client device(s) 102. The alert output may include, but is not limited to, a push notification, banner notification, in-application message, badge, audible alert, haptic alert, and/or a visual indication within an itinerary UI, a touchpoint-detail interface, or another interface associated with the selected touchpoint. In some aspects, the alert output may identify the corresponding touchpoint, the current wait time, one or more predicted or forecasted wait-time conditions, and/or one or more actionable options, such as navigating to the touchpoint, presenting route information to the touchpoint, updating the itinerary to prioritize the touchpoint, or otherwise modifying a corresponding itinerary segment. In this way, the wait-time monitoring, forecasting, and alert services may operate in conjunction with the itinerary generation and dynamic itinerary adjustment processes described herein so that a visitor-participant may more efficiently engage with rides or other queue-based touchpoints during favorable wait-time conditions.

In some instances, client device(s) 102 and/or system server(s) 120 may further determine whether a wait-time alert should be provided based at least in part on location information associated with the visitor-participant and/or an estimated travel condition between the visitor-participant and the corresponding ride or other attraction-type touchpoint. For instance, client device(s) 102 and/or system server(s) 120 may determine an estimated travel time, travel distance, route feasibility, crowd-related impedance, pathway congestion level, predicted arrival time, and/or other reachability information for the corresponding touchpoint based on current location data of the visitor-participant, pathway information, real-time destination venue data, historical destination venue data, crowd flow patterns, attendance statistics, movement density across venue sections, and/or itinerary information. In some examples, client device(s) 102 and/or system server(s) 120 may determine that a corresponding wait-time alert is not to be presented when the estimated travel time to the touchpoint exceeds a threshold travel-time value, when the estimated travel distance exceeds a threshold distance value, when a predicted arrival time of the visitor-participant is later than a predicted expiration time of a favorable wait-time condition, and/or when one or more congestion metrics associated with a pathway to the touchpoint satisfy a congestion threshold. Moreover, based on such determinations, client device(s) 102 and/or system server(s) 120 may suppress, defer, deprioritize, or replace the alert with another notification associated with a more reachable touchpoint. In this way, location-aware alert filtering may improve relevance of wait-time alerts relative to the visitor-participant's position within the destination venue.

By way of non-limiting example, the threshold travel-time value may correspond to 5 minutes, 10 minutes, 15 minutes, or another value. The threshold distance value may correspond to 0.1 mile, 0.25 mile, 0.5 mile, or another value. Further, the predicted expiration time of the favorable wait-time condition may correspond to a time at which the current wait time is predicted to rise above the threshold wait-time condition associated with the alert. Such information may indicate, and/or client device(s) 102 and/or system server(s) 120 may determine, that the visitor-participant is not expected to reach the corresponding touchpoint before the favorable wait-time condition no longer exists. Based on that determination, client device(s) 102 and/or system server(s) 120 may suppress the notification, delay transmission of the notification pending a later re-evaluation, deprioritize the notification relative to another notification, cancel a previously queued notification, and/or replace the notification with another notification associated with a more reachable touchpoint.

In some aspects, client device(s) 102 and/or system server(s) 120 may process health data (e.g., real-time heart rate data, activity level data, or health data indicating signs of fatigue) obtained from a health monitoring device operatively coupled to the visitor-participant, along with other data such as, the historical interaction data of the visitor-participant, additional user-provided data of the visitor-participant, historical weather data, historical destination venue data, real-time weather data, and/or real-time destination venue data, to determine health-related recommendations for the visitor-participant. As described herein, the health-related recommendations may be associated with one or more health related metrics associated with the visitor-participant's visit or engagement with one or more touchpoints of the destination venue. In some aspects, health recommendation system(s) 127 may adjust a visitor-participant's itinerary based on health-related recommendations of the visitor-participant.

For example, client device(s) 102 and/or system server(s) 120 may process the health data (e.g., real-time heart rate data, activity level data, or health data indicating signs of fatigue) to determine the visitor-participant may have exertion levels over a predetermined exertion level threshold corresponding to overexertion by the visitor-participant. Client device(s) 102 and/or system server(s) 120 may recommend rest periods, shaded pathways, lower-intensity attractions, lower exertion routes, indoor attractions, and/or hydration reminders.

In some instances, client device(s) 102 and/or system server(s) 120 may implement one or more translation processes to obtain content in a first language, such as audio data of spoken words or sentences, or a script of a show, and to generate a translation of the content into a second language. Further, the content may be obtained from client device(s) 102 and/or a computing system (e.g., destination venue management system 130). The translation process(es) may include providing real-time language translation and contextual subtitle overlays on a UI provided by client device(s) 102 and/or system server(s) 120. For example, audio data in a first language may be generated from one or more sensors operatively coupled to client device(s) 102. Client device(s) 102 and/or system server(s) 120 may obtain the audio data from client device 102. Moreover, client device(s) 102 and/or system server(s) 120 may translate the audio data into a second language. In some instances, client device(s) 102 and/or system server(s) 120 may generate synchronized subtitles or translated text overlays on a UI displayed by client device 102 of a visitor-participant. In some cases, the second language may be indicated by the visitor-participant as the preferred language (e.g., from preference data).

### Power-Efficient Location Tracking in Destination Venue(s)

In some examples, client device(s) 102 and/or system server(s) 120 may implement power-efficient location tracking techniques to support itinerary generation and recap functionality during extended visits to destination venues. As described herein, such techniques may enable accurate visitor-participant tracking over the course of all-day or multi-day events while reducing battery consumption of client device(s) 102.

In some cases, client device(s) 102 may implement low-power GPS tracking in combination with dead reckoning techniques. For example, the GPS module of client device(s) 102 may be configured to activate intermittently when the visitor-participant has moved beyond a predetermined threshold distance (e.g., ten meters). Between GPS activations, the client device(s) 102 may estimate movement using dead reckoning sensors such as a gyroscope, accelerometer, or pedometer/step counter.

In some aspects, client device(s) 102 may dynamically adjust a polling interval (e.g., the time between successive activations of the GPS module described) based on recent signal conditions and location accuracy, while relying on dead reckoning during the GPS off-periods. For example, client device(s) 102 may lengthen the polling interval when recent GPS fixes indicate high positional accuracy (e.g., error margin less than three meters). In such example, client device(s) 102 may conserve battery by lengthening the polling interval while keeping the GPS module inactive for longer durations, while dead reckoning continues to estimate the visitor-participant's position. Alternatively, client device(s) 102 may shorten the polling interval when accuracy degrades (e.g., error margin greater than five meters) or when sudden movements or directional changes increase uncertainty in the dead reckoning estimates. In such example, client device(s) 102 may balance power efficiency with location accuracy during extended visitor-participant sessions.

In some instances, the adjustment of the polling interval may be further informed by signal confidence parameters. Such parameters may include, but are not limited to, GPS signal strength, horizontal and vertical error margins, and error distance values calculated as the difference between the dead reckoning estimate and the most recent GPS fix. In some configurations, client device(s) 102 may determine that these signal confidence parameters fall within acceptable thresholds. In such configurations, client device(s) 102 may extend GPS off-periods. Moreover, when client device(s) 102 determine the signal confidence parameters indicate uncertainty, client device(s) 102 may accelerate polling to reestablish accurate positional data.

In some examples, client device(s) 102 may dynamically adjust GPS shutdown periods and/or polling intervals based on an adaptive or sliding-scale algorithm that determines whether to extend or shorten the GPS shutdown periods. For example, client device(s) 102 may operate dead reckoning as the default positioning method during high-confidence intervals, while temporarily disabling or deemphasizing dead reckoning in low-confidence regions (e.g., indoor structures or areas of heavy interference) where accumulated errors are more likely. In such example, client device(s) 102 may ensure that reliable positional information is delivered while minimizing unnecessary battery usage.

Although particularly advantageous for theme parks and amusement venues, these techniques may extend to other large-scale destination venues with day-long events where accurate recap information is desired but power efficiency is critical. Examples include music festivals, cultural fairs, comic conventions, and renaissance fairs, zoos, aquariums, botanical gardens, street fairs, farmers markets, neighborhood festivals, and community events, where visitor-participants may traverse wide areas for many hours and later wish to review a breadcrumb trail of their movement history. By enabling recap UIs to present accurate location summaries without draining battery life, client device(s) 102 and/or system server(s) 120 may provide extended usability across diverse destination venue types.

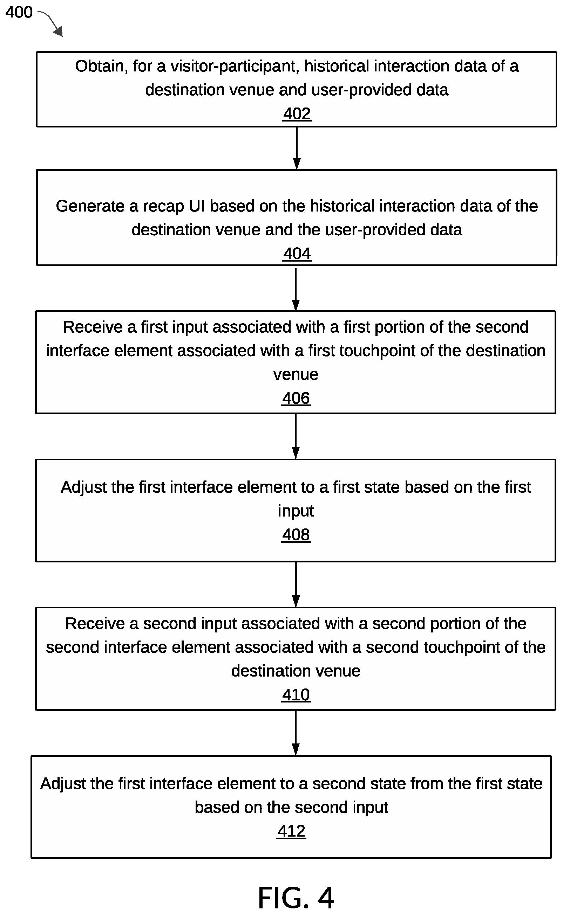

FIG. 4 is a flowchart for a method 400 for adjusting a map representation of one or more touchpoints a visitor-participant visited and/or engaged with, according to some examples of the present disclosure. Method 400 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 4, as will be understood by a person of ordinary skill in the art.

Method 400 shall be described with reference to FIGS. 1-3. However, method 400 is not limited to those examples. At step 402, system server(s) 120 may obtain, for a visitor-participant, historical interaction data of a destination venue and additional user-provided data associated with the visitor-participant's visit to the destination venue. The historical interaction data may include, for example, check-in data, purchase data, review data, movement data, or other interaction information characterizing the touchpoints visited. The additional user-provided data may include explicit visitor-participant inputs such as stated preferences, accessibility needs, or itinerary selections. For example, the historical interaction data may indicate a visitor-participant purchased a souvenir mug at a merchandise-type touchpoint in the afternoon.

At step 404, system server(s) 120 may generate a recap user interface (UI) based on the historical interaction data of the destination venue and the additional user-provided data. The recap UI may include at least a first interface element associated with a map representation of the destination venue and a second interface element identifying one or more touchpoints of the destination venue the visitor-participant engaged with. For example, the recap UI may display the souvenir mug purchase as a touchpoint, annotated with the purchase time and location, and visually linked to its position on the venue map. In such example, a portion of the second interface element may identify the merchandise touchpoint associated with the souvenir mug purchase. In some examples, the recap UI may further include a shareable day-recap interface that presents destination-venue identifying information, one or more visit-summary metrics, touchpoint-specific count information, and one or more controls configured to initiate sharing and/or present route information associated with the visit.

At step 406, system server(s) 120 may receive a first input associated with a first portion of the second interface element associated with a first touchpoint of the destination venue. For example, a visitor-participant may select the portion of the second interface element representing the merchandise shop where the souvenir mug was purchased.

At step 408, system server(s) 120 may adjust the first interface element to a first state based on the first input. In some examples, the first state may be associated with focusing on a graphical representation associated with the first touchpoint within the map representation. In some cases, this adjustment may include, but is not limited to, highlighting the location of the merchandise shop on the map representation, zooming into that region, and presenting associated metadata such as the timestamp of the souvenir purchase.

At step 410, system server(s) 120 may receive a second input associated with a second portion of the second interface element associated with a second touchpoint of the destination venue. For example, the visitor-participant may select a portion of the second interface element representing a dining location visited shortly after the souvenir purchase.

At step 412, system server(s) 120 may adjust the first interface element to a second state from the first state based on the second input. The second state may be associated with focusing on a graphical representation associated with the second touchpoint. For example, system server(s) 120 may transition the map from the first state, which emphasized the merchandise shop, to the second state, which emphasizes the dining location, and may display the path connecting the two touchpoints (e.g., via an animated playback), thereby highlighting the chronological relationship between the souvenir purchase and the subsequent dining activity.

### Example Neural Network Architectures

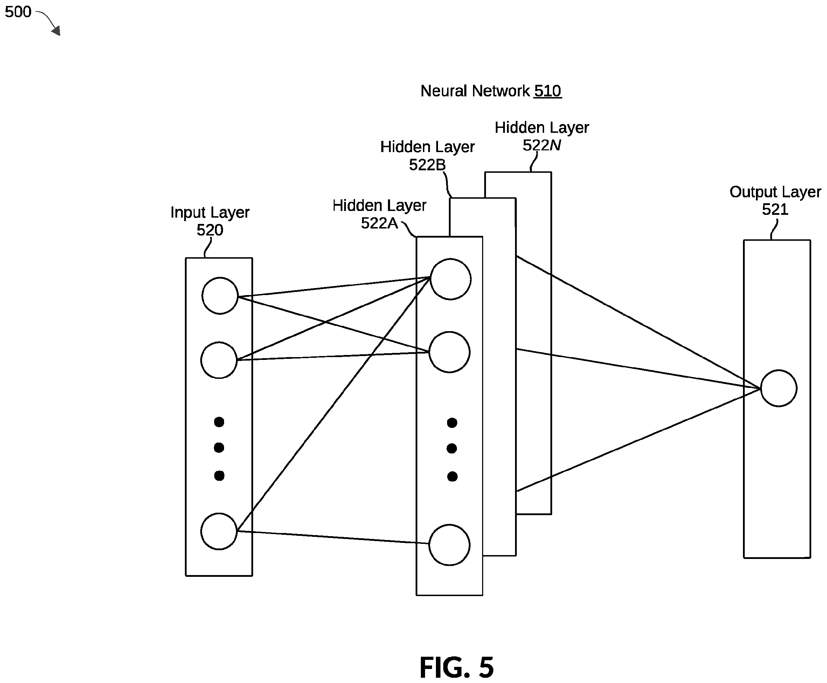

FIG. 5 is a diagram illustrating an example architecture 500 of an example neural network 510. The example architecture 500 can be used to implement any neural network described herein and/or any components described herein that can include or implement a neural network. For example, the architecture 500 can be used to implement a neural network(s) of the itinerary system(s) 122, recap system(s) 123, exit management system(s) 124, lighting recommendation system(s) 126, health recommendation system(s) 127, translation system(s) 128 and/or any portion thereof.

The architecture 500 of the neural network 510 can include an input layer 520 that can be configured to receive and process data to generate one or more outputs. The architecture 500 of the neural network 510 can also include hidden layers 522A, 522B, through 522N. The hidden layers 522A, 522B, through 522N include "n" number of hidden layers, where "n" is an integer greater than or equal to one. The number of hidden layers can be made to include as many layers as needed for the given application. The architecture 500 of the neural network 510 can further include an output layer 521 that provides an output resulting from the processing performed by the hidden layers 522A, 522B, through 522N.

The neural network 510 is a multi-layer neural network of interconnected nodes. Each node can represent a piece of information. Information associated with the nodes is shared among the different layers and each layer retains information as information is processed. In some cases, the neural network 510 can include a feed-forward network, in which case there are no feedback connections where outputs of the network are fed back into itself. In some cases, the neural network 510 can include a recurrent neural network, which can have loops that allow information to be carried across nodes while reading in input.

Information can be exchanged between nodes through node-to-node interconnections between the various layers. Nodes of the input layer 520 can activate a set of nodes in the first hidden layer 522A. For example, as shown, each of the input nodes of the input layer 520 is connected to each of the nodes of the first hidden layer 522A. The nodes of the first hidden layer 522A can transform the information of each input node by applying activation functions to the input node information. The information derived from the transformation can then be passed to and can activate the nodes of the next hidden layer 522B, which can perform their own designated functions. Example functions include convolutional, up-sampling, data transformation, and/or any other suitable functions. The output of the hidden layer 522B can then activate nodes of the next hidden layer, and so on. The output of the last hidden layer 522N can activate one or more nodes of the output layer 521, at which an output is provided. In some cases, while nodes in the neural network 510 are shown as having multiple output lines, a node can have a single output and all lines shown as being output from a node represent the same output value.

In some cases, each node or interconnection between nodes can have a weight that is a set of parameters derived from the training of the neural network 510. Once the neural network 510 is trained, it can be referred to as a trained neural network, which can be used to generate one or more outputs. For example, an interconnection between nodes can represent a piece of information learned about the interconnected nodes. The interconnection can have a tunable numeric weight that can be tuned (e.g., based on a training dataset), allowing the neural network 510 to be adaptive to inputs and able to learn as more and more data is processed.

The neural network 510 is pre-trained to process the features from the data in the input layer 520 using the different hidden layers 522A, 522B, through 522N to provide the output through the output layer 521.

In some cases, the neural network 510 can adjust the weights of the nodes using a training process called backpropagation. A backpropagation process can include a forward pass, a loss function, a backward pass, and a weight update. The forward pass, loss function, backward pass, and parameter/weight update is performed for one training iteration. The process can be repeated for a certain number of iterations for each set of training data until the neural network 510 is trained well enough so that the weights of the layers are accurately tuned.

To perform training, a loss function can be used to analyze an error in the output. Any suitable loss function definition can be used, such as a Cross-Entropy loss. Another example of a loss function includes the mean squared error (MSE), defined as E_total = ∑(1/2 (target-output)^2). The loss can be set to be equal to the value of E_total.

The loss (or error) will be high for the initial training data since the actual values will be much different than the predicted output. The goal of training is to minimize the amount of loss so that the predicted output is the same as the training output. The neural network 510 can perform a backward pass by determining which inputs (weights) most contributed to the loss of the network and can adjust the weights so that the loss decreases and is eventually minimized.

The neural network 510 can include any suitable deep network. One example neural network includes a transformer network, which can be used to implement a large language model. Another example neural network includes a Convolutional Neural Network (CNN), which includes an input layer and an output layer, with multiple hidden layers between the input and out layers. The hidden layers of a CNN include a series of convolutional, nonlinear, pooling (for downsampling), and fully connected layers. The neural network 510 can include any other deep network other than a transformer or CNN, such as an encoder-decoder network, an encoder-only network, a decoder-only network, a mixture of experts (MoE) network, a generative model network, an autoencoder, Deep Belief Nets (DBNs), Recurrent Neural Networks (RNNs), among others.

As understood by those of skill in the art, machine-learning based techniques can vary depending on the desired implementation. For example, machine-learning schemes can utilize one or more of the following, alone or in combination: hidden Markov models, RNNs, CNNs, deep learning, Bayesian symbolic methods, Generative Adversarial Networks (GANs), support vector machines, image registration methods, and applicable rule-based systems. Where regression algorithms are used, they may include but are not limited to a Stochastic Gradient Descent Regressor, a Passive Aggressive Regressor, etc. Machine learning classification models can also be based on clustering algorithms (e.g., a Mini-batch K-means clustering algorithm), a recommendation algorithm (e.g., a Minwise Hashing algorithm, or Euclidean Locality-Sensitive Hashing (LSH) algorithm), and/or an anomaly detection algorithm, such as a local outlier factor. Additionally, machine-learning models can employ a dimensionality reduction approach, such as, one or more of: a Mini-batch Dictionary Learning algorithm, an incremental Principal Component Analysis (PCA) algorithm, a Latent Dirichlet Allocation algorithm, and/or a Mini-batch K-means algorithm, etc.

### Example Computer System

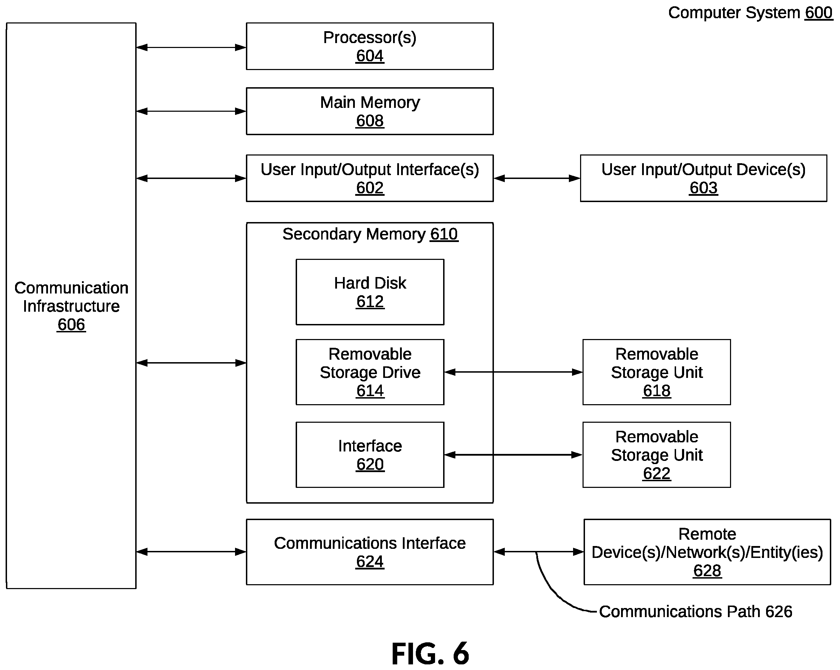

Various aspects and examples may be implemented, for example, using one or more well-known computer systems, such as computer system 600 shown in FIG. 6. For example, the client device 102 may be implemented using combinations or sub-combinations of computer system 600. Also, or alternatively, one or more computer systems 600 may be used, for example, to implement any of the aspects and examples discussed herein, as well as combinations and sub-combinations thereof.

Computer system 600 may include one or more processors (also called central processing units, or CPUs), such as a processor 604. Processor 604 may be connected to a communication infrastructure or bus 606.

Computer system 600 may also include user input/output device(s) 603, such as monitors, keyboards, pointing devices, etc., which may communicate with communication infrastructure 606 through user input/output interface(s) 602.

One or more of processors 604 may be a graphics processing unit (GPU). In some examples, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 600 may also include a main or primary memory 608, such as random-access memory (RAM). Main memory 608 may include one or more levels of cache. Main memory 608 may have stored therein control logic (e.g., computer software) and/or data.

Computer system 600 may also include one or more secondary storage devices or memory 610. Secondary memory 610 may include, for example, a hard disk drive 612 and/or a removable storage device or drive 614. Removable storage drive 614 may be a floppy disk drive, a magnetic tape drive, a compact disk drive, an optical storage device, tape backup device, and/or any other storage device/drive.

Removable storage drive 614 may interact with a removable storage unit 618. Removable storage unit 618 may include a computer usable or readable storage device having stored thereon computer software (control logic) and/or data. Removable storage unit 618 may be a floppy disk, magnetic tape, compact disk, DVD, optical storage disk, and/or any other computer data storage device. Removable storage drive 614 may read from and/or write to removable storage unit 618.

Secondary memory 610 may include other means, devices, components, instrumentalities or other approaches for allowing computer programs and/or other instructions and/or data to be accessed by computer system 600. Such means, devices, components, instrumentalities or other approaches may include, for example, a removable storage unit 622 and an interface 620. Examples of the removable storage unit 622 and the interface 620 may include a program cartridge and cartridge interface (such as that found in video game devices), a removable memory chip (such as an EPROM or PROM) and associated socket, a memory stick and USB or other port, a memory card and associated memory card slot, and/or any other removable storage unit and associated interface.

Computer system 600 may include a communication or network interface 624. Communication interface 624 may enable computer system 600 to communicate and interact with any combination of external devices, external networks, external entities, etc. (individually and collectively referenced by reference number 628). For example, communication interface 624 may allow computer system 600 to communicate with external or remote devices 628 over communications path 626, which may be wired and/or wireless (or a combination thereof), and which may include any combination of LANs, WANs, the Internet, etc. Control logic and/or data may be transmitted to and from computer system 600 via communication path 626.

Computer system 600 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 600 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 600 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some examples, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 600, main memory 608, secondary memory 610, and removable storage units 618 and 622, as well as tangible articles of manufacture embodying any combination of the foregoing. Such control logic, when executed by one or more data processing devices (such as computer system 600 or processor(s) 604), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 6. In particular, embodiments can operate with software, hardware, and/or operating system implementations other than those described herein.

In some aspects, the computer and/or processors can be configured to facilitate or perform any of the following aspects:
Aspect 1. A computer-implemented method comprising: obtaining, for a visitor-participant, historical interaction data of a destination venue and user-provided data; generating a recap user interface (UI) based on the historical interaction data of the destination venue and the user-provided data, the recap UI including at least a first interface element associated with a map representation of the destination venue and a second interface element identifying one or more touchpoints of the destination venue the visitor-participant engaged with; receiving a first input associated with a first portion of the second interface element associated with a first touchpoint of the destination venue; adjusting the first interface element to a first state based on the first input, the first state being associated with focusing on a graphical representation associated with the first touchpoint; receiving a second input to a second portion of the second interface element associated with a second touchpoint of the destination venue; and adjusting the first interface element to a second state from the first state based on the second input, the second state being associated with focusing on a graphical representation associated with the second touchpoint.
Aspect 2. The computer-implemented method of Aspect 1, wherein the recap UI is configured to present a chronological pathway of the visitor-participant's movement through the destination venue based on the adjustment of the first interface element to the second state from the first state.
Aspect 3. The computer-implemented method of Aspect 2, wherein the presentation is an animated playback.
Aspect 4. The computer-implemented method of any of Aspects 1 to 3, wherein generating the recap UI further comprises annotating the graphical representation of one or more touchpoints with metadata comprising at least one of a corresponding timestamp, a duration of engagement, a purchase record and a visitor-provided review.
Aspect 5. The computer-implemented method of any of Aspects 1 to 4, wherein the generated recap UI is provided to a computing device associated with another visitor-participant, the computing device displays the recap UI.
Aspect 6. The computer-implemented method of any of Aspects 1 to 5, wherein adjusting the first interface element comprises dynamically re-centering the map representation on the graphical representation of the selected touchpoint in response to the received input.
Aspect 7. The computer-implemented method of any of Aspects 1 to 6, wherein the historical interaction data comprises at least one of location data, timestamp data, purchase data, review data, and movement data associated with the visitor-participant's engagement with the destination venue.
Aspect 8. A computer system comprising: at least one memory; and at least one processor coupled to the at least one memory, the at least one processor is configured to perform operations comprising: obtaining, for a visitor-participant, historical interaction data of a destination venue and user-provided data; generating a recap user interface (UI) based on the historical interaction data of the destination venue and the user-provided data, the recap UI including at least a first interface element associated with a map representation of the destination venue and a second interface element identifying one or more touchpoints of the destination venue the visitor-participant engaged with; receiving a first input associated with a first portion of the second interface element associated with a first touchpoint of the destination venue; adjusting the first interface element to a first state based on the first input, the first state being associated with focusing on a graphical representation associated with the first touchpoint; receiving a second input to a second portion of the second interface element associated with a second touchpoint of the destination venue; and adjusting the first interface element to a second state from the first state based on the second input, the second state being associated with focusing on a graphical representation associated with the second touchpoint.
Aspect 9. The computer system of Aspect 8, wherein the recap UI is configured to present a chronological pathway of the visitor-participant's movement through the destination venue based on the adjustment of the first interface element to the second state from the first state.
Aspect 10. The computer system of Aspect 9, wherein the presentation is an animated playback.
Aspect 11. The computer system of any of Aspects 8 to 10, wherein generating the recap UI further comprises annotating the graphical representation of one or more touchpoints with metadata comprising at least one of a corresponding timestamp, a duration of engagement, a purchase record and a visitor-provided review.
Aspect 12. The computer system of any of Aspects 8 to 11, wherein the generated recap UI is provided to a computing device associated with another visitor-participant, the computing device displays the recap UI.
Aspect 13. The computer system of any of Aspects 8 to 12, wherein adjusting the first interface element comprises dynamically re-centering the map representation on the graphical representation of the selected touchpoint in response to the received input.
Aspect 14. The computer system of any of Aspects 8 to 13, wherein the historical interaction data comprises at least one of location data, timestamp data, purchase data, review data, and movement data associated with the visitor-participant's engagement with the destination venue.
Aspect 15. A non-transitory computer-readable medium having instructions stored thereon that, when executed by at least one computing device, causes the at least one computing device to perform operations comprising: obtaining, for a visitor-participant, historical interaction data of a destination venue and user-provided data; generating a recap user interface (UI) based on the historical interaction data of the destination venue and the user-provided data, the recap UI including at least a first interface element associated with a map representation of the destination venue and a second interface element identifying one or more touchpoints of the destination venue the visitor-participant engaged with; receiving a first input associated with a first portion of the second interface element associated with a first touchpoint of the destination venue; adjusting the first interface element to a first state based on the first input, the first state being associated with focusing on a graphical representation associated with the first touchpoint; receiving a second input to a second portion of the second interface element associated with a second touchpoint of the destination venue; and adjusting the first interface element to a second state from the first state based on the second input, the second state being associated with focusing on a graphical representation associated with the second touchpoint.
Aspect 16. The non-transitory computer-readable medium of Aspect 15, wherein the recap UI is configured to present a chronological pathway of the visitor-participant's movement through the destination venue based on the adjustment of the first interface element to the second state from the first state.
Aspect 17. The non-transitory computer-readable medium of Aspect 16, wherein the presentation is an animated playback.
Aspect 18. The non-transitory computer-readable medium of any of Aspects 15 to 17, wherein generating the recap UI further comprises annotating the graphical representation of one or more touchpoints with metadata comprising at least one of a corresponding timestamp, a duration of engagement, a purchase record and a visitor-provided review.
Aspect 19. The non-transitory computer-readable medium of any of Aspects 15 to 18, wherein the generated recap UI is provided to a computing device associated with another visitor-participant, the computing device displays the recap UI.
Aspect 20. The non-transitory computer-readable medium of any of Aspects 15 to 19, wherein adjusting the first interface element comprises dynamically re-centering the map representation on the graphical representation of the selected touchpoint in response to the received input.

It is to be appreciated that the Detailed Description section, and not any other section, is intended to be used to interpret the claims. Other sections can set forth one or more but not all exemplary embodiments as contemplated by the inventor(s), and thus, are not intended to limit this disclosure or the appended claims in any way.

While this disclosure describes exemplary embodiments for exemplary fields and applications, it should be understood that the disclosure is not limited thereto. Other embodiments and modifications thereto are possible and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still cooperate or interact with each other.

The breadth and scope of this disclosure should not be limited by any of the above-described exemplary embodiments but should be defined only in accordance with the following claims and their equivalents.

Claim language or other language in the disclosure reciting "at least one of" a set and/or "one or more" of a set indicates that one member of the set or multiple members of the set (in any combination) satisfy the claim. For example, claim language reciting "at least one of A and B" or "at least one of A or B" means A, B, or A and B. In another example, claim language reciting "at least one of A, B, and C" or "at least one of A, B, or C" means A, B, C, or A and B, or A and C, or B and C, or A and B and C. The language "at least one of" a set and/or "one or more" of a set does not limit the set to the items listed in the set. For example, claim language reciting "at least one of A and B" or "at least one of A or B" can mean A, B, or A and B, and can additionally include items not listed in the set of A and B.

In particular, the invention relates to the following combinations of features, as are expressly defined in accordance with the sections **[0233]** to **[0252]** below:
A computer-implemented method comprising:
obtaining, for a visitor-participant, historical interaction data of a destination venue and user-provided data;
generating a recap user interface (UI) based on the historical interaction data of the destination venue and the user-provided data, the recap UI including at least a first interface element associated with a map representation of the destination venue and a second interface element identifying one or more touchpoints of the destination venue the visitor-participant engaged with;
receiving a first input associated with a first portion of the second interface element associated with a first touchpoint of the destination venue;
adjusting the first interface element to a first state based on the first input, the first state being associated with focusing on a graphical representation associated with the first touchpoint;
receiving a second input to a second portion of the second interface element associated with a second touchpoint of the destination venue; and
adjusting the first interface element to a second state from the first state based on the second input, the second state being associated with focusing on a graphical representation associated with the second touchpoint.

The computer-implemented method of section **[0233],** wherein the recap UI is configured to present a chronological pathway of the visitor-participant's movement through the destination venue based on the adjustment of the first interface element to the second state from the first state.

The computer-implemented method of section **[0234],** wherein the presentation is an animated playback.

The computer-implemented method of any of sections **[0233]** to **[0235],** wherein generating the recap UI further comprises annotating the graphical representation of one or more touchpoints with metadata comprising at least one of a corresponding timestamp, a duration of engagement, a purchase record and a visitor-provided review.

The computer-implemented method of section **[0233],** wherein the generated recap UI is provided to a computing device associated with another visitor-participant, the computing device displays the recap UI.

The computer-implemented method of any of sections **[0233]** to **[0237],** wherein adjusting the first interface element comprises dynamically re-centering the map representation on the graphical representation of the selected touchpoint in response to the received input.

The computer-implemented method of any of sections **[0233]** to **[0238],** wherein the historical interaction data comprises at least one of location data, timestamp data, purchase data, review data, and movement data associated with the visitor-participant's engagement with the destination venue.

A computer system comprising:
at least one memory; and
at least one processor coupled to the at least one memory, the at least one processor is configured to perform operations comprising:
   obtaining, for a visitor-participant, historical interaction data of a destination venue and user-provided data;
   generating a recap user interface (UI) based on the historical interaction data of the destination venue and the user-provided data, the recap UI including at least a first interface element associated with a map representation of the destination venue and a second interface element identifying one or more touchpoints of the destination venue the visitor-participant engaged with;
   receiving a first input associated with a first portion of the second interface element associated with a first touchpoint of the destination venue;
   adjusting the first interface element to a first state based on the first input, the first state being associated with focusing on a graphical representation associated with the first touchpoint;
   receiving a second input to a second portion of the second interface element associated with a second touchpoint of the destination venue; and
   adjusting the first interface element to a second state from the first state based on the second input, the second state being associated with focusing on a graphical representation associated with the second touchpoint.

The computer system of section **[0240],** wherein the recap UI is configured to present a chronological pathway of the visitor-participant's movement through the destination venue based on the adjustment of the first interface element to the second state from the first state.

The computer system of section **[0241],** wherein the presentation is an animated playback.

The computer system of any of sections **[0240] to [0242],** wherein generating the recap UI further comprises annotating the graphical representation of one or more touchpoints with metadata comprising at least one of a corresponding timestamp, a duration of engagement, a purchase record and a visitor-provided review.

The computer system of any of sections **[0240] to [0242],** wherein the generated recap UI is provided to a computing device associated with another visitor-participant, the computing device displays the recap UI.

The computer system of any of sections **[0240] to [0242],** wherein adjusting the first interface element comprises dynamically re-centering the map representation on the graphical representation of the selected touchpoint in response to the received input.

The computer system of any of sections **[0240] to [0242],** wherein the historical interaction data comprises at least one of location data, timestamp data, purchase data, review data, and movement data associated with the visitor-participant's engagement with the destination venue.

A non-transitory computer-readable medium having instructions stored thereon that, when executed by at least one computing device, causes the at least one computing device to perform operations comprising:
obtaining, for a visitor-participant, historical interaction data of a destination venue and user-provided data;
generating a recap user interface (UI) based on the historical interaction data of the destination venue and the user-provided data, the recap UI including at least a first interface element associated with a map representation of the destination venue and a second interface element identifying one or more touchpoints of the destination venue the visitor-participant engaged with;
receiving a first input associated with a first portion of the second interface element associated with a first touchpoint of the destination venue;
adjusting the first interface element to a first state based on the first input, the first state being associated with focusing on a graphical representation associated with the first touchpoint;
receiving a second input to a second portion of the second interface element associated with a second touchpoint of the destination venue; and
adjusting the first interface element to a second state from the first state based on the second input, the second state being associated with focusing on a graphical representation associated with the second touchpoint.

The non-transitory computer-readable medium of section **[0247],** wherein the recap UI is configured to present a chronological pathway of the visitor-participant's movement through the destination venue based on the adjustment of the first interface element to the second state from the first state.

The non-transitory computer-readable medium of section **[0248],** wherein the presentation is an animated playback.

The non-transitory computer-readable medium of section **[0247],** wherein generating the recap UI further comprises annotating the graphical representation of one or more touchpoints with metadata comprising at least one of a corresponding timestamp, a duration of engagement, a purchase record and a visitor-provided review.

The non-transitory computer-readable medium of section **[0247],** wherein the generated recap UI is provided to a computing device associated with another visitor-participant, the computing device displays the recap UI.

The non-transitory computer-readable medium of section [0247], wherein adjusting the first interface element comprises dynamically re-centering the map representation on the graphical representation of the selected touchpoint in response to the received input.

## Claims

1. A computer-implemented method comprising:
obtaining, for a visitor-participant, historical interaction data of a destination venue and user-provided data;
generating a recap user interface (UI) based on the historical interaction data of the destination venue and the user-provided data, the recap UI including at least a first interface element associated with a map representation of the destination venue and a second interface element identifying one or more touchpoints of the destination venue the visitor-participant engaged with;
receiving a first input associated with a first portion of the second interface element associated with a first touchpoint of the destination venue;
adjusting the first interface element to a first state based on the first input, the first state being associated with focusing on a graphical representation associated with the first touchpoint;
receiving a second input to a second portion of the second interface element associated with a second touchpoint of the destination venue; and
adjusting the first interface element to a second state from the first state based on the second input, the second state being associated with focusing on a graphical representation associated with the second touchpoint.

2. The computer-implemented method of claim 1, wherein the recap UI is configured to present a chronological pathway of the visitor-participant's movement through the destination venue based on the adjustment of the first interface element to the second state from the first state.

3. The computer-implemented method of claim 2, wherein the presentation is an animated playback.

4. The computer-implemented method of any of the preceding claims, wherein generating the recap UI further comprises annotating the graphical representation of one or more touchpoints with metadata comprising at least one of a corresponding timestamp, a duration of engagement, a purchase record and a visitor-provided review.

5. The computer-implemented method of claim 1, wherein the generated recap UI is provided to a computing device associated with another visitor-participant, the computing device displays the recap UI.

6. The computer-implemented method of any of the preceding claims, wherein adjusting the first interface element comprises dynamically re-centering the map representation on the graphical representation of the selected touchpoint in response to the received input.

7. The computer-implemented method of any of the preceding claims, wherein the historical interaction data comprises at least one of location data, timestamp data, purchase data, review data, and movement data associated with the visitor-participant's engagement with the destination venue.

8. A computer system comprising:
at least one memory; and
at least one processor coupled to the at least one memory, the at least one processor is configured to perform operations comprising:
obtaining, for a visitor-participant, historical interaction data of a destination venue and user-provided data;
generating a recap user interface (UI) based on the historical interaction data of the destination venue and the user-provided data, the recap UI including at least a first interface element associated with a map representation of the destination venue and a second interface element identifying one or more touchpoints of the destination venue the visitor-participant engaged with;
receiving a first input associated with a first portion of the second interface element associated with a first touchpoint of the destination venue;
adjusting the first interface element to a first state based on the first input, the first state being associated with focusing on a graphical representation associated with the first touchpoint;
receiving a second input to a second portion of the second interface element associated with a second touchpoint of the destination venue; and
adjusting the first interface element to a second state from the first state based on the second input, the second state being associated with focusing on a graphical representation associated with the second touchpoint.

9. The computer system of claim 8, wherein the recap UI is configured to present a chronological pathway of the visitor-participant's movement through the destination venue based on the adjustment of the first interface element to the second state from the first state.

10. The computer system of claim 9, wherein the presentation is an animated playback.

11. The computer system of any of claims 8 to 10, wherein generating the recap UI further comprises annotating the graphical representation of one or more touchpoints with metadata comprising at least one of a corresponding timestamp, a duration of engagement, a purchase record and a visitor-provided review.

12. The computer system of any of claims 8 to 10, wherein the generated recap UI is provided to a computing device associated with another visitor-participant, the computing device displays the recap UI.

13. The computer system of claims 8 to 10, wherein adjusting the first interface element comprises dynamically re-centering the map representation on the graphical representation of the selected touchpoint in response to the received input.

14. The computer system of any of claims 8 to 10, wherein the historical interaction data comprises at least one of location data, timestamp data, purchase data, review data, and movement data associated with the visitor-participant's engagement with the destination venue.

15. A non-transitory computer-readable medium having instructions stored thereon that, when executed by at least one computing device, causes the at least one computing device to perform operations comprising:
obtaining, for a visitor-participant, historical interaction data of a destination venue and user-provided data;
generating a recap user interface (UI) based on the historical interaction data of the destination venue and the user-provided data, the recap UI including at least a first interface element associated with a map representation of the destination venue and a second interface element identifying one or more touchpoints of the destination venue the visitor-participant engaged with;
receiving a first input associated with a first portion of the second interface element associated with a first touchpoint of the destination venue;
adjusting the first interface element to a first state based on the first input, the first state being associated with focusing on a graphical representation associated with the first touchpoint;
receiving a second input to a second portion of the second interface element associated with a second touchpoint of the destination venue; and
adjusting the first interface element to a second state from the first state based on the second input, the second state being associated with focusing on a graphical representation associated with the second touchpoint.
